# EUROPEAN PATENT SPECIFICATION

(11) **EP 4 399 932 B1**
(45) Date of publication and mention of the grant of the patent: **12.02.2025**
(21) Application number: 21773366.6
(22) Date of filing: 07.09.2021
(51) Int. Cl.: H04W 74/00, H04W 74/04, H04W 74/0808

(54) **AP-ORCHESTRATED OVERLAID TRANSMISSIONS**
AP-ORCHESTRIERTE ÜBERLAGERTE ÜBERTRAGUNGEN
TRANSMISSIONS SUPERPOSÉES ORCHESTRÉES PAR AP

(43) Date of publication of application: 17.07.2024
(73) Proprietor: Telefonaktiebolaget LM Ericsson (publ), 164 83 Stockholm (SE)
(72) Inventor: DI TARANTO, Rocco, 223 59 Lund (SE); AMBEDE, Abhishek, 141 58 Huddinge (SE); SEDIN, Jonas, Brentford TW8 0SU (GB); WILHELMSSON, Leif, 222 20 Lund (SE); SUNDMAN, Dennis, 191 47 Sollentuna (SE); LOPEZ, Miguel, 52074 Aachen (DE)
(74) Representative: Ericsson
(86) International application number: PCT/EP2021/074573
(87) International publication number: WO 2023/036398

(56) References cited:
- US-A1- 2017 127 298
- US-A1- 2017 325 266
- US-A1- 2018 176 865
- US-A1- 2020 029 350
- US-A1- 2021 144 766
- JONAS SEDIN (ERICSSON): "Low Latency resource agreements", vol. 802.11 EHT; 802.11be, no. 2, 3 December 2020 (2020-12-03), pages 1 - 15, XP068175378, Retrieved from the Internet <URL:https://mentor.ieee.org/802.11/dcn/20/11-20-1670-02-00be-low-latency-resource-agreements.pptx> [retrieved on 20201203]

## Description

### Technical Field

The present invention relates to methods for controlling wireless transmissions and to corresponding devices, systems, and computer programs.

### Background

In wireless communication technologies, there is an increased interest in using unlicensed bands, like the 2.4 GHz ISM band, the 5 GHz band, the 6 GHz band, and the 60GHz band using more advanced channel access technologies. Historically, Wi-Fi has been the dominant standard in unlicensed bands when it comes to applications requiring support for high data rates. Due to the large available bandwidth in the unlicensed band, the WLAN (Wireless Local Area Network) technology based on the IEEE 802.11 family standards provides a very simple distributed channel access mechanism based on a so-called distributed coordination function (DCF).

Distributed channel access means that a device, in IEEE 802.11 terminology known as a station (STA), tries to access the wireless channel when it has data to send. Effectively there is no difference in channel access whether the station is an access point (AP) or a non-access point (non-AP). DCF works well as long as the load is not too high. When the load is high, and in particular when the number of stations trying to access the wireless channel is large, channel access based on DCF does not work well. The reason for this is that there will be a high probability of collision on the channel, leading to poor channel usage.

A default channel access mechanism used in current WLAN systems is referred to as enhanced distributed channel access (EDCA), as specified in IEEE Standard for Information technology-Telecommunications and information exchange between systems Local and metropolitan area networks-Specific requirements - Part 11: Wireless LAN Medium Access Control (MAC) and Physical Layer (PHY) Specifications," in IEEE Std 802.11-2016 (Revision of IEEE Std 802.11-2012) , vol., no., pp.1-3534, 14 Dec. 2016, in the following denoted as "IEEE 802.11 PHY Specifications". In the EDCA channel access mechanism, the STA accesses the channel using a set of channel access parameters based on a traffic class of the data. The wireless channel is obtained for a time duration denoted as TXOP (transmit opportunity), in which multiple frames of the same data class may be transmitted. The maximum size of a TXOP depends on the data type. A typical duration of a TXOP is in the range of a few milliseconds.

To improve channel usage, and in particular to allow for better support of a large number of devices, a more centralized channel access may be utilized. Such centralized channel access may involve that rather than letting a STA access the channel whenever it has data to send, the channel access is controlled by the AP. A corresponding channel access scheme is for example supported in the IEEE 802.11ax technology, see IEEE 802.11ax-2021 - IEEE Standard for Information technology- Telecommunications and information exchange between systems Local and metropolitan area networks-Specific requirements Part 11: Wireless LAN Medium Access Control (MAC) and Physical Layer (PHY) Specifications Amendment 1: Enhancements for High Efficiency WLAN (November 2019), in the following denoted as "IEEE 802.11ax amendment" or High Efficiency (HE) amendment. The IEEE 802.11ax technology, or HE technology, for example supports orthogonal frequency division multiple access (OFDMA) in both downlink (DL), i.e., in a direction from the AP to the STA, and uplink (UL), i.e., in a direction from the STA to the AP. Also multi-user transmission in form of multi-user multiple input multiple output (MU-MIMO) is supported for both the DL and the UL. By supporting MU transmission and letting the AP control the channel access within a cell, efficient channel usage is achieved and one can avoid collisions arising due to contention in the cell, in the IEEE 802.11 terminology also referred to as basic service set (BSS).

One feature introduced by the IEEE 802.11ax technology is the concept of resource units (RUs). The RUs are defined by orthogonal frequency division multiplexing (OFDM) on multiple subcarriers of the wireless channel and may be used for allocating frequency resources of the wireless channel to a PPDU (Physical Layer Protocol Data Unit) transmission. In the IEEE 802.11 technology, the subcarriers are also denoted as "tones". Depending upon the number of tones, the different sizes of RUs defined and supported in the HE technology are: 26-tone RU, 52-tone RU, 106-tone RU, 242-tone RU, 484-tone RU, 996-tone RU and 2x996-tone RU. Using the RU feature, the available bandwidth (BW) of the wireless channel can be divided into multiple RUs. As an example, a BW of 20 MHz can be divided into nine 26-tone RUs, four 52-tone RUs, or two 106-tone RUs, or can support one 242-tone RU. The main use case for this RU feature in HE is OFDMA based multi-user transmission. In such OFDMA based multi-user transmission, every user is allocated a single RU, possibly also with different RU sizes for different users. The HE technology supports DL OFDMA and UL OFDMA transmissions. Two flavors of UL OFDMA transmissions are supported in the HE technology: a first mode of UL OFDMA in which specific users are explicitly allocated specific RUs for transmissions, and a second mode denoted as UL OFDMA based Random Access (UORA), in which some RUs are reserved for random access. While the HE technology supports the allocation of only one RU per STA, the IEEE 802.11be technology is expected to also support the allocation of more than one RU to a single STA, see IEEE P802.11be/D0.3 Draft Standard for Information technology- Telecommunications and information exchange between systems Local and metropolitan area networks-Specific requirements Part 11: Wireless LAN Medium Access Control (MAC) and Physical Layer (PHY) Specifications Amendment: Enhancements for Extremely High Throughput (January 2021), in the following denoted as "IEEE 802.11be Draft" or Extremely High Throughput (EHT) draft. The EHT technology also supports new RU sizes that are derived from the combinations of the different RU sizes defined in the HE technology.

In an UL OFDMA PPDU having a transmission BW of 20 MHz, the BW of a preamble portion of the UL OFDMA PPDU is always 20 MHz, irrespective size and location of the allocated RU. As compared to that, in an UL OFDMA PPDU having a transmission BW of 40 MHz or more, the BW of the preamble portion of the UL OFDMA PPDU varies depending upon the size and location of the allocated RU. For example, in the HE technology, a 80 MHz UL OFDMA PPDU that has a 242-tone RU allocation for a data field of the UL OFDMA PPDU, the BW of the preamble portion can be either 20 MHz or 40 MHz, and it depends upon which specific 242-tone RU is allocated to the data field. Accordingly, in the HE technology the BW of the preamble portion of an UL OFDMA PPDU, or more generally any trigger-based PPDU, depends on size and location of the tones of the allocated RU. This dependency can for example be seen from Figure 27-12 of the EHT draft.

In addition to high bandwidth communications in unlicensed bands, there is increasing interest in wireless communications with low and/or bounded latency, in the following denoted as low/bounded latency communications. Such low/bounded latency wireless communications may support, for example, applications in Industrial Internet of Things (IoT) and gaming. In such applications, a typical requirement is that a data packet is transmitted "at the right time". The transmitter of the data packet should thus be able to precisely control when the data packet is actually transmitted. To achieve this, the transmitter may need to access the wireless channel with a low channel access delay that has a variation around the mean, also denoted as channel access jitter, which is bounded. Another requirement is high reliability to ensure that data packets are correctly received with high probability, thus avoiding delays due to retransmission or packet loss. Yet another requirement is that the receiver processes the received data as soon as possible to deliver the data to higher layers. The IEEE 802.11 PHY Specifications and their amendments have so far not been developed with an emphasis on achieving communications with low/bounded latency and high reliability. This may for example be attributed to the usage of unlicensed frequency bands and the resulting channel access rules, as well as existing regulations for unlicensed frequency bands, which typically makes it difficult to provide deterministic channel access opportunities for the transmitting STAs. More deterministic channel access opportunities of the STAs may be achieved when the STAs operate in a scheduled OFDMA mode as for example supported by the IEEE 802.11ax technology. Such scheduled mode however typically does not guarantee achieving low/bounded latency. For example, US 2017/0325266 A1 describes triggered multi-user uplink transmissions which may be performed using OFDMA or spatial multiplexing.

Even more importantly, if applications and use cases supported in wired networks based on time sensitive networking (TSN) standards are to be supported over a wireless medium, and possibly in an unlicensed band, it may be critical that the utilized wireless technology fulfills strict performance requirements with respect to latency and reliability, as for example described in "IEEE 802.1 TSN - An Introduction", TGbe 19-1298, by Janos Farkos (URL: https://mentor.ieee.org/802.11/dcn/19/11-19-1298-01-00be-ieee-802-1-tsn-an-introduction.pdf, July 2019). This demonstrates the need to enhance WLAN technologies to support applications with requirements in terms of latency and reliability which may be as strict as those supported in wired networks.

Accordingly, there is a need for techniques which allow for improved support of low-latency data traffic in a wireless communication system.

### Summary

According to an embodiment, a method of controlling wireless transmissions in a wireless communication system is provided. According to the method, an AP of the wireless communication system reserves a TXOP on a wireless channel. Further, the AP determines, for a wireless station associated with the AP, a first set of one or more transmit parameters to be applied in a scheduled first wireless transmission from the wireless station to the AP. Further, the AP sends a message for triggering the first wireless transmission by the wireless station. The message indicates the first set of one or more transmit parameters. Further, the message indicates a second set of one or more transmit parameters and that at least one additional wireless station receiving the message is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling.

According to a further embodiment, a method of controlling wireless transmissions in a wireless communication system is provided. According to the method, a wireless station receives, from an AP of the wireless communication system, a message for triggering a scheduled first wireless transmission by another wireless station in a TXOP reserved by the AP. The message indicates a first set of one or more transmit parameters to be used by the other wireless station when performing the first wireless transmission. Further, the message indicates a second set of one or more transmit parameters and that the wireless station is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling. In response to the message, the wireless station performs the second wireless transmission in the TXOP with a duration smaller than the first wireless transmission and using the indicated second set of one or more transmit parameters on radio resources which are at least in part overlapping with radio resources allocated to the first wireless transmission.

According to a further embodiment, an AP for a wireless communication system is provided. The access point is configured to reserve a TXOP on a wireless channel. Further, the AP is configured to determine, for a wireless station associated with the AP, a first set of one or more transmit parameters to be applied in a scheduled first wireless transmission from the wireless station to the AP. Further, the AP is configured to send a message for triggering the first wireless transmission by the wireless station, the message indicating the first set of one or more transmit parameters. The message further indicates a second set of one or more transmit parameters and that at least one additional wireless station receiving the message is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling.

According to a further embodiment, an AP for a wireless communication system is provided. The access point comprises at least one processor and a memory. The memory contains instructions executable by said at least one processor, whereby the AP is operative to reserve a TXOP on a wireless channel. Further, the memory contains instructions executable by said at least one processor, whereby the AP is operative to determine, for a wireless station associated with the AP, a first set of one or more transmit parameters to be applied in a scheduled first wireless transmission from the wireless station to the AP. Further, the memory contains instructions executable by said at least one processor, whereby the AP is operative to send a message for triggering the first wireless transmission by the wireless station, the message indicating the first set of one or more transmit parameters. The message further indicates a second set of one or more transmit parameters and that at least one additional wireless station receiving the message is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling.

According to a further embodiment, a wireless station for a wireless communication system is provided. The wireless station is configured to receive, from an AP of the wireless communication system, a message for triggering a scheduled first wireless transmission by another wireless station in a TXOP reserved by the AP. The message indicates a first set of one or more transmit parameters to be used by the other wireless station when performing the first wireless transmission and further indicates a second set of one or more transmit parameters and that the wireless station is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling. Further, the wireless station is configured to, in response to the message, perform the second wireless transmission in the TXOP with a duration smaller than the first wireless transmission and using the indicated second set of one or more transmit parameters on radio resources which are at least in part overlapping with radio resources allocated to the first wireless transmission.

According to a further embodiment, a wireless station for a wireless communication system is provided. The wireless station comprises at least one processor and a memory. The memory contains instructions executable by said at least one processor, whereby the wireless station is operative to receive, from an AP of the wireless communication system, a message for triggering a scheduled first wireless transmission by another wireless station in a TXOP reserved by the AP. The message indicates a first set of one or more transmit parameters to be used by the other wireless station when performing the first wireless transmission and further indicates a second set of one or more transmit parameters and that the wireless station is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling. Further, the memory contains instructions executable by said at least one processor, whereby the wireless station is operative to, in response to the message, perform the second wireless transmission in the TXOP with a duration smaller than the first wireless transmission and using the indicated second set of one or more transmit parameters on radio resources which are at least in part overlapping with radio resources allocated to the first wireless transmission.

According to a further embodiment, a computer program or computer program product is provided, e.g., in the form of a non-transitory storage medium, which comprises program code to be executed by at least one processor of an AP is provided. Execution of the program code causes the AP to reserve a TXOP on a wireless channel. Further, execution of the program code causes the AP to determine, for a wireless station associated with the AP, a first set of one or more transmit parameters to be applied in a scheduled first wireless transmission from the wireless station to the AP. Further, execution of the program code causes the AP to send a message for triggering the first wireless transmission by the wireless station, the message indicating the first set of one or more transmit parameters. The message further indicates a second set of one or more transmit parameters and that at least one additional wireless station receiving the message is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling.

According to a further embodiment, a computer program or computer program product is provided, e.g., in the form of a non-transitory storage medium, which comprises program code to be executed by at least one processor of a wireless station is provided. Execution of the program code causes the wireless station to receive, from an AP of the wireless communication system, a message for triggering a scheduled first wireless transmission by another wireless station in a TXOP reserved by the AP. The message indicates a first set of one or more transmit parameters to be used by the other wireless station when performing the first wireless transmission and further indicates a second set of one or more transmit parameters and that the wireless station is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling. Further, execution of the program code causes the wireless station to, in response to the message, perform the second wireless transmission in the TXOP with a duration smaller than the first wireless transmission and using the indicated second set of one or more transmit parameters on radio resources which are at least in part overlapping with radio resources allocated to the first wireless transmission.

Details of such embodiments and further embodiments will be apparent from the following detailed description.

### Brief Description of the Drawings

Fig. 1 schematically illustrates a wireless communication system according to an embodiment.
Fig. 2 schematically illustrates an augmented trigger frame according to an embodiment.
Fig. 3A schematically illustrates an example of TXOP resource usage according to an embodiment.
Fig. 3B schematically illustrates a further example of TXOP resource usage according to an embodiment.
Fig. 3C schematically illustrates a further example of TXOP resource usage according to an embodiment.
Fig. 3D schematically illustrates a further example of TXOP resource usage according to an embodiment.
Fig. 4 schematically illustrates an example of processes according to an embodiment.
Fig. 5 schematically illustrates a further example of processes according to an embodiment.
Fig. 6 shows a flowchart for schematically illustrating a method according to an embodiment.
Fig. 7 shows a block diagram for schematically illustrating functionalities of an access point according to an embodiment.
Fig. 8 shows a flowchart for schematically illustrating a further method according to an embodiment.
Fig. 9 shows a block diagram for schematically illustrating functionalities of a wireless station according to an embodiment.
Fig. 10 schematically illustrates structures of an access point according to an embodiment.
Fig. 11 schematically illustrates structures of a wireless station according to an embodiment.

### Detailed Description

In the following, concepts in accordance with exemplary embodiments of the invention will be explained in more detail and with reference to the accompanying drawings. The illustrated embodiments relate to controlling of wireless transmissions in a wireless communication system. The wireless communication system may be a WLAN (Wireless Local Area Network) system based on a IEEE 802.11 technology. However, it is noted that the illustrated concepts could also be applied to other wireless communication technologies, e.g., to contention-based modes of the LTE (Long Term Evolution) or NR (New Radio) technology specified by 3GPP (3^{rd} Generation Partnership Project). The illustrated concepts may be implemented by various types of wireless devices, in particular by Access Points (APs) and/or by non-AP Stations (STAs).

According to the illustrated concepts an AP may orchestrate overlaid transmission in a reserved TXOP. In particular, the AP may first reserve a TXOP on a wireless channel. Based on the needs of one or more STAs associated to the AP, the AP may allocate fractions of the available BW of the wireless channel in the TXOP to one or more UL transmissions by the STA(s), e.g., in terms of RUs separated in the frequency domain. This is herein also referred to a scheduling of UL transmission(s). Further, the AP may determine a set of transmit parameters to be used by each STA when performing a UL transmission on the allocated bandwidth. These transmit parameters may for example include an MCS (modulation and coding scheme) and/or a transmit power, e.g., in terms of a maximum and/or minimum transmit power. The AP then sends a message for triggering the UL transmission(s) by the STA(s). This message also indicates that one or more other STAs receiving the message are allowed to perform an additional UL transmission in the TXOP for a duration smaller than a duration of the scheduled UL transmission(s) and using radio resources which are at least in part overlapping with the allocated BW. The overlap may be in the time domain and in some cases also in the frequency domain. Such multiple UL transmissions using at least in part overlapping radio resources are herein also denoted as overlaid UL transmissions. Accordingly, a scheduled UL transmission may be overlaid with an additional short UL transmission, which can be used for conveying low-latency data without causing excessive interference to the scheduled UL transmission. The message also indicates transmit parameters for such additional UL transmission(s). This message is in the following also denoted as Augmented Trigger Frame (ATF). The ATF may be received by all STAs in the AP's BSS. In response to receiving the message, each STA may perform an overlaid UL transmission to the AP, without incurring latency due to a scheduling process. The ATF may thus enable UL transmissions with low and bounded latency. Accordingly, after reserving the TXOP, the AP which reserved the TXOP may send an ATF to inform the STAs on whether overlaid UL transmissions are allowed during the reserved TXOP, e.g., by using a flag, and also indicating transmit parameters, e.g., transmit power, and/or MCS, and/or allocated BWs.

The orchestration of overlaid transmission may be supported by certain hardware elements of the AP. Further, there may be additional requirements in terms of computational capabilities to select the transmit parameters. In particular, the AP can use two sets of receive chains to receive two or more overlaid incoming UL transmissions on the wireless channel. Specific decoding operations may be used to enable reliable decoding of the overlaid UL transmissions. Further, determining the transmit parameters may involve that, considering the BW of the wireless channel, the AP selects a code rate for best-effort (BE) UL transmission, taking into account that a part of the available BW could also be used by additional overlaid UL transmissions, e.g., critical UL transmissions requiring low-latency and/or bounded latency. In this way, the AP may ensure that conditions for reliable reception of the overlaid UL transmissions are met. Further, the AP can use the ATF to synchronize the overlaid UL transmissions so that OFDM symbols of the overlaid UL transmissions are time-aligned. This may facilitate reliable decoding of the overlaid UL transmissions.

Accordingly, in the illustrated concepts the AP reserving the wireless channel may be responsible for controlling the scheduled UL transmissions in such a way that there is room to accommodate one or more overlaid additional UL transmissions by STAs in the BSS.

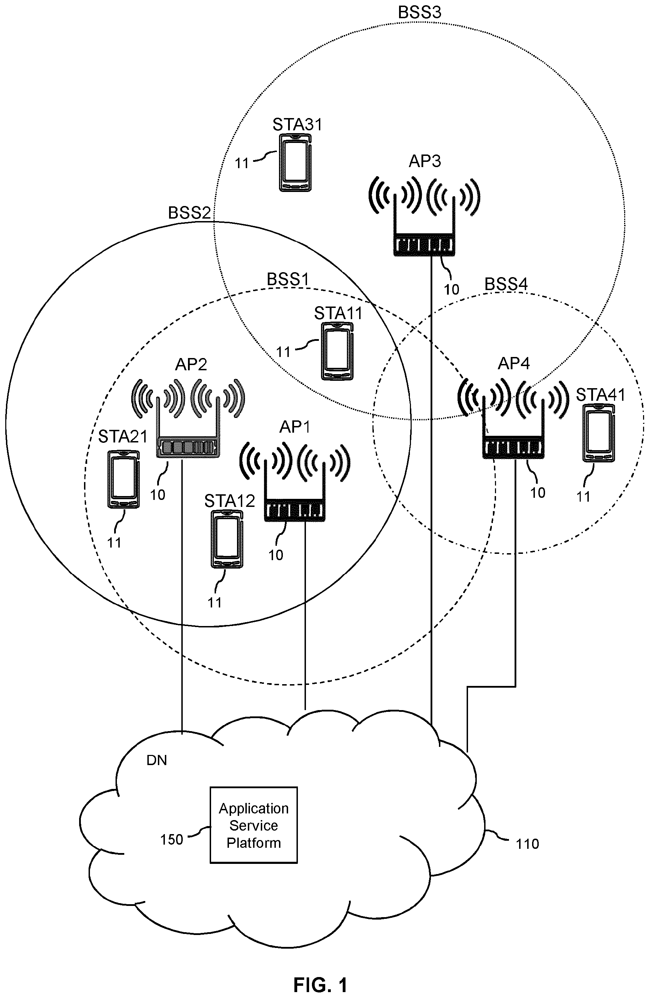

Fig. 1 illustrates an exemplary wireless communication system according to an embodiment. In the illustrated example, the wireless communication system includes multiple APs 10, in the illustrated example referred to as AP1, AP2, AP3, AP4, and multiple stations 11, in the illustrated example referred to as STA11, STA12, STA21, STA31, and STA41. STA11 and STA12 are served by AP1 (in a first BSS denoted as BSS1), STA21 is served by AP2 (in a second BSS denoted as BSS2), STA31 is served by AP3 (in a third BSS denoted as BSS3), and STA41 is served by AP4 (in a fourth BSS denoted as BSS4). The stations 11 may correspond to various kinds of wireless devices, for example user terminals, such as mobile or stationary computing devices like smartphones, laptop computers, desktop computers, tablet computers, gaming devices, or the like. Further, the stations 11 could for example correspond to other kinds of equipment like smart home devices, printers, multimedia devices, data storage devices, or the like.

In the example of Fig. 1, each of the stations 11 may connect through a radio link to one of the APs 10. For example depending on location or channel conditions experienced by a given station 11, the station 11 may select an appropriate AP 10 and BSS for establishing the radio link. The radio link may be based on one or more OFDM carriers from a frequency spectrum which is shared on the basis of a contention based mechanism, e.g., an unlicensed band like the 2.4 GHz ISM band, the 5 GHz band, the 6 GHz band, or the 60 GHz band.

Each AP 10 may provide data connectivity of the STAs 11 connected to the AP 10. As further illustrated, the APs 10 may be connected to a data network (DN) 110. In this way, the APs 10 may also provide data connectivity of stations 11 connected to different APs 10. Further, the APs 10 may also provide data connectivity of the stations 11 to other entities, e.g., to one or more servers, service providers, data sources, data sinks, user terminals, or the like. Accordingly, the radio link established between a given station 11 and its serving AP 10 may be used for providing various kinds of services to the station 11, e.g., a voice service, a multimedia service, or other data service. Such services may be based on applications which are executed on the station 11 and/or on a device linked to the station 11. By way of example, Fig. 1 illustrates an application service platform 150 provided in the DN 110. The application(s) executed on the station 11 and/or on one or more other devices linked to the station 11 may use the radio link for data communication with one or more other stations 11 and/or the application service platform 150, thereby enabling utilization of the corresponding service(s) at the station 11.

To enable low-latency and/or bounded latency of stations 11 in a scenario like illustrated in Fig. 1, the APs 10 may orchestrate overlaid UL transmissions in their respective BSS, by triggering one or more scheduled UL transmissions in the BSS using the above-mentioned ATF. The scheduled UL transmissions may carry BE traffic, while the overlaid additional UL transmissions which are allowed and controlled by the ATF do not require scheduling and may thus carry critical traffic requiring low-latency and/or bounded latency. Here, it is noted that low-latency traffic may be defined as traffic requiring that the latency is below a threshold. Similarly, bounded latency traffic may be defined as traffic requiring that variation of the latency is below a threshold. In the latter case, the latency itself may have a considerable value, which is however bounded in its variation and thus substantially constant over a sequence of UL transmissions. In many cases, critical traffic may require both low and bounded latency. For the sake of simplicity, the following explanations refer to such critical traffic requiring both low and bounded latency, which is in the following also denoted as LL (low-latency) traffic.

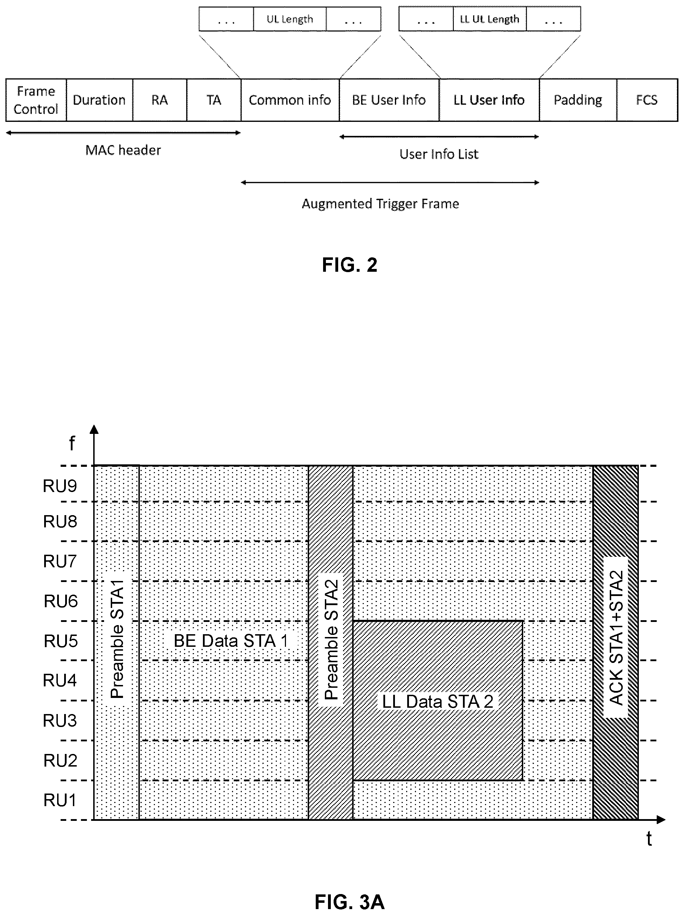

Fig. 2 illustrates an exemplary structure of the ATF. The ATF may be embedded in a MAC (Medium Access Control) frame, with a MAC header, a frame body including the ATF, optional padding, and a frame check sequence (FCS). The MAC header includes a Frame Control field, a Duration field, and an address field with a Receiving STA address (RA) and a Transmitting STA address (TA).

As illustrated in Fig. 2, the ATF may be based on the structure of the TF (Trigger Frame) specified in the IEEE 802.11ax technology and include a Common Info field and a list of User Info fields. As illustrated, the User Info fields include a User Info field for BE traffic and a User Info field for the LL traffic. The User Info field for the BE traffic includes transmit parameters of the scheduled BE PPDU. The transmit parameters for the BE PPDU may for example include an MCS, and/or a transmit power, and/or a scheduled duration of the BE PPDU. The User Info field for the LL traffic includes transmit parameters of a LL PPDU which is allowed to be overlaid to the BE PPDU. The transmit parameters for the LL PPDU may for example include an MCS, and/or a transmit power, and/or a maximum duration of the overlaid LL PPDU. Further, the transmit parameters of the BE PPDU include one or more RUs allocated to the BE PPDU. The transmit parameters of the allowed LL PPDU also include one or more RUs. Since the allowed LL PPDU is overlaid, in time and/or frequency domain, the latter RU(s) may overlap the RU(s) allocated to the scheduled BE PPDU. As further illustrated in Fig. 2, the transmit parameters of the scheduled BE PPDU and of the allowed overlaid PPDU also include a respective UL length, i.e., a time duration for transmission of the BE PPDU or the allowed LL PPDU, respectively. In the case of the LL PPDU, the UL length may define the above-mentioned maximum duration of the LL PPDU, so that the actually transmitted LL PPDU is shorter than the UL length indicated by the User Info field for the LL traffic. Here, the timing of the allowed overlaid LL PPDU may be controlled in such a way that the overlaid LL PPDU will start after the beginning of the BE PPDU and end before the end of the BE PPDU. More specifically, the LL PPDU may be restricted to start after the preamble portion of the BE PPDU and to end before the end of the BE PPDU. In some scenarios, if there is at least some overlap between the RU(s) allocated to the LL PPDU and the RU(s) allocated to the BE PPDU, then the allowed maximum duration of the LL PPDU may be same as the scheduled duration of the BE PPDU.

In the illustrated concepts, the AP orchestrating the overlaid UL transmissions may be one of two different types, depending on the AP's hardware capabilities and computational capabilities: a simple AP or an enhanced AP.

The simple AP has one receive and transmit chain. Thus, the simple AP is not capable of decoding two UL signals at the same time. Rather, the simple AP may operate by decoding a part of the BE PPDU which is as large as possible, i.e., the part which does not overlap in time with the overlaid LL PPDU, i.e., starts before the LL PPDU begins and may continue after the overlaid LL PPDU has ended. Once the LL PPDU is detected, the simple AP will however switch to decoding the LL PPDU.

The enhanced AP has two or more sets of transmit and receive chains. Accordingly, the enhanced AP is capable of separately processing the two overlaid UL transmissions. In this case, decoding of the BE PPDU may be accomplished based on two values of SINR (Signal to Noise and Interference Ratio): a first SINR computed using the preamble portion of the BE PPDU, and a second SINR computed once the interfering transmission of the LL PPDU has been detected. Furthermore, the enhanced AP can be capable of identifying a set of corrupted subcarriers in the transmission of the BE PPDU and/or a time period over which such corruption occurs. With this information, the enhanced AP may normalize LLR (log-likelihood ratio) values output by a constellation de-mapper by assigning a normalized, and thus lower, value to the LLRs corresponding to corrupted subcarriers or may set these LLR values to 0, i.e., regardless of the SINR on corrupted subcarriers. Information that could be extracted from these subcarriers would thus be discarded. For the decoding of the LL PPDU, the enhanced AP is typically always capable of decoding the LL PPDU, because the enhanced AP selected the transmit parameters of the LL PPDU in such a way that it is decodable with high reliability, taking into account the overlaid BE PPDU. For example, this may be accomplished by leveraging the maximum transmit power of the LL PDDU and the minimum transmit power of the BE PPDU, as well as the MCS of the BE PPDU and the MCS of the LL PPDU.

The requirement on the enhanced AP having more than two sets of transmit and receive chains may for example be met by an AP multi-link device (MLD). An MLD is capable to operate on two links at the same time. Therefore, whenever the AP MLD has two different sets of transmit and receive chains, which in the AP MLD are typically used on two different wireless channel, such AP MLD would typically also have the hardware capability to operate as an enhanced AP of the illustrated concepts, by using the two or more sets of transmit and receive chains on the same wireless channel. However, also non-MLD APs could be equipped with two or more sets of transmit and receive chains and thus have the hardware capability to operate as an enhanced AP of the illustrated concepts.

When there is a need to overlay transmission of an BE PPDU and a LL PPDU, the way of selecting the transmit parameters may differ between a simple AP and an enhanced AP: An enhanced AP may first reserve the wireless channel with a certain BW for a certain TXOP duration. Then the enhanced AP may jointly select transmit powers, MCSs and BWs for overlaid transmissions. This may be accomplished in such a way that the whole BW is made available for the BE PPDU while only a fraction of the BW is made available to the possible overlaid LL PPDU. The fraction of BW assigned to the possible overlaid LL PPDU may be jointly selected with the MCS for the BE PPDU so that such fraction is sufficiently smaller than the redundancy introduced by the code rate selected for the BE PPDU. The benefit of selecting a sufficiently smaller fraction and not just a smaller fraction can be seen from numerical simulations, which indicate that the ability to decode a codeword of the BE PPDU depends not only on how many bits or LLR values are corrupted, but also on which particular bits or LLR values are corrupted. Here, it needs to be considered that for an LDPC (Low Density Parity Check Code), a codeword typically includes information bits, parity bits and, in some cases, repeated bits. This has the effect that the fraction of the BW that can be overlaid with the transmission of the LL PPDU without losing reliability of reception is smaller than that expected when only considering the code rate selected for the transmission of the BE PPDU to achieve nearly error-free reception. Accordingly, it may be advantageous to reduce the fraction of the BW to be overlaid by a further margin. The enhanced AP may consider this margin when selecting the MCS for transmission of the BE PPDU and the fraction of the BW for the possible overlaid LL PPDDU. At the same time, the enhanced AP may select the transmit powers for the BE PPDU and the possible overlaid LL PPDU in such a way that the expected SINR of the BE PPDU in absence of interference by an overlaid LL PPDU and the expected SINR of the LL PPDU with interference by an overlaid BE PPDU meet the minimum requirements for reliable reception with the selected MCS of the BE PPDU and the selected MCS of the possible overlaid LL PPDU, respectively.

A simple AP may first reserve the wireless channel with a certain BW for a certain TXOP duration. Then, although the simple AP does not have the capability to decode two overlaid UL transmissions, it may allocate the entire available BW both for transmission of a BE PPDU and for transmission of a possible overlaid LL PPDU. Here, it is noted that a STA sending the overlaid LL PPDU might only be capable of operating on a 20 MHz BW channel, e.g., because this STA is a simple sensor or other low-complexity device, whereas the AP has reserved a wider BW channel. Further, the STA sending the LL PPDU could be limited in its link budget, e.g., in transmit power. In such cases, it may be beneficial if the simple AP assigns the maximum possible BW for the transmission of the possible overlaid LL PPDU. As mentioned above, the simple AP may operate by decoding as large part as possible of the BE PPDU, as long there is no overlaid transmission of a LL PPDU. When transmission of an overlaid LL PPDU is detected, the simple AP may switch to decode the whole transmission of the overlaid LL PPDU. Accordingly, the impact of interference by the overlaid LL PPDU can be reduced or avoided in the time domain. Interfered codewords of the BE PPDU may be discarded and lost, but the number of discarded codewords may be kept as small as possible depending on the amount of data of in the LL PPDU, in particular depending on the length of the LL PPDU. Further, the simple AP may select the transmit powers for the BE PPDU and the possible overlaid LL PPDU in such a way that the expected SINR of the BE PPDU in absence of interference by an overlaid LL PPDU and the expected SINR LL PPDU with interference by an overlaid BE PPDU meet the minimum requirements for reliable reception with the selected MCS of the BE PPDU and the selected MCS of the possible overlaid LL PPDU, respectively. It is noted that if the simple AP does not have the capability to resume reception of the BE PPDU after the overlaid transmission of the LL PPDU has ended, the impact of the interference generated by the overlaid transmission of the LL PPDU is typically higher if the transmission of the LL PPDU starts earlier, thus reducing the part of the transmission of the BE PPDU which is not interfered.

In some scenarios, the ATF may also synchronize the overlaid UL transmissions in time. Both transmission of a BE PPDU and transmission of an LL PPDU may contain a legacy preamble, e.g., using 64-point FFT (Fast Fourier Transform) in 20 MHz, and an HE preamble, e.g., using 256-point FFT in 20 MHz. In this case, the OFDM symbols of the BE PPDU and the OFDM symbols of the LL PPDU may be synchronized in time such that the 256-point FFT based OFDM symbols of both PPDUs are aligned in time. This typically means that the legacy preamble of the LL PPDU should end just before the next OFDM symbol of the BE PPDU starts.

In some scenarios, the AP may also instruct the STA sending in the BE PPDU to puncture the BE PPDU so that a fraction of the available BW is left empty for the possible overlaid LL PPDU, so that the BE PPDU and the LL PPDU use radio resources which are only overlapping in the time domain or that the BE PPDU and the LL PPDU use radio resources which are only partially overlapping in the frequency domain. This may also be accomplished by including at least one corresponding puncturing parameter in the transmit parameters indicated in the ATF. For example in the case of 80 MHz BW of the reserved wireless channel, the STA sending the BE PPDU could be allowed to use only 60 MHz BW. The remaining 20 MHz BW are then exclusively available for the possible overlaid LL PPDU, without causing interference on the BE PPDU. In an alternative example, the STA sending the BE PPDU could be allowed to use 60 MHz BW thus puncturing a 20 MHz BW portion, and a 40 MHz BW portion including the punctured 20 MHz portion could be made available for the possible overlaid LL PPDU, thereby causing a partial frequency overlap and potential interference only on 20 MHz BW of the BE PPDU. Due to such reduction of frequency overlap, the BE PPDU can use higher code rate and higher transmit power. Further, the LL PPDU could use higher MCS and/or higher transmit power.

In some scenarios, the AP may acknowledge successful reception of the overlaid LL PPDU. The AP may for example send an acknowledgement immediately after an SIFS (Short Interframe Space) from successful reception of the LL PPDU. For a simple AP, this may prevent or delay resuming reception of the BE PPDU. An enhanced AP may send the acknowledgement on another transmit and receive chain, while continuing to receive the BE PPDU. In some scenarios, the AP may acknowledge successful reception of both the LL PPDU and the BE PPDU through a multi-STA Block ACK as specified in the HE technology. In some scenarios, the AP may acknowledge successful reception of the overlaid LL PPDU after reception of the BE PPDU.

For explaining the illustrated concepts in more detail, an exemplary scenario involving an AP and two STAs in the BSS will be considered. The two STAs are denoted as STA1 and STA2. The AP and the STAs may correspond to any of the APs 10 and stations 11 illustrated in Fig. 1. For example, the AP could correspond to AP1 and the STAs may correspond to STA11 and STA21. Fig. 3A illustrates an example of the resulting usage of radio resources, in terms of RUs defined in an overall BW of 20 MHz of the wireless channel. The AP of this example is assumed to be a smart AP.

In the illustrated example, UL heavy traffic is assumed, in which the AP receives UL data from both STA1 and STA2, with STA1 transmitting BE traffic and STA2 transmitting critical LL traffic. The traffic of STA2 is thus subject to different, in particular more strict, latency requirements than the traffic of STA1. The AP is responsible for reserving the wireless channel, i.e., to contend for the wireless channel and to reserve a TXOP when gaining access to the wireless channel. The reserved TXOP may have a typical duration of up to 4.096ms. In response to reserving the TXOP, the AP schedules transmission of a BE PPDU by STA1, because the AP is aware that STA1 has data to transmit, e.g., due to a corresponding request from STA1. To trigger transmission of the BE PPDU, the AP sends an ATF which is received by STA1 and also by STA2.

The AP has two sets of receive chains. One receive chain is used to decode the BE PPDU from STA1, while the other is used to decode the LL PPDU from STA2. As can be seen, all RUs of the available BW are allocated to the scheduled BE PPDU transmitted by STA1. The LL PPDU transmitted by STA2 in turn uses only a part of the bandwidth allocated to the BE PPDU, namely RU2-RU5. The assignment of these RUs is indicated in the ATF sent by the AP. Specifically, the ATF may indicate in the BE User Info field that RU1-RU9 are allocated to the scheduled BE PPDU, and may further indicate in the LL User Info field that an overlaid LL PPDU is allowed to use RU2-RU5. As can be further seen from Fig. 3A, the BE PPDU (from STA1) and the LL PPDU (from STA2) include a preamble portion which extends over the entire BW of the wireless channel, which is in compliance with the IEEE 802.11 PHY Specifications. As can be further seen, the LL PPDU does not start before the preamble portion of the BE PPDU has ended. Such behavior of STA2 may be mandated by the ATF.

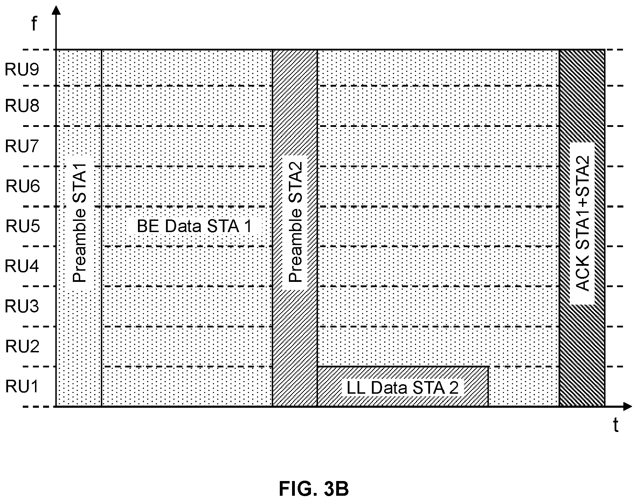

The example of Fig. 3B is similar to that of Fig. 3A. As can be seen, all RUs of the available BW are allocated to the scheduled BE PPDU transmitted by STA1. However, in this example the LL PPDU transmitted by STA2 in turn only uses one RU, in the illustrated example RU1.

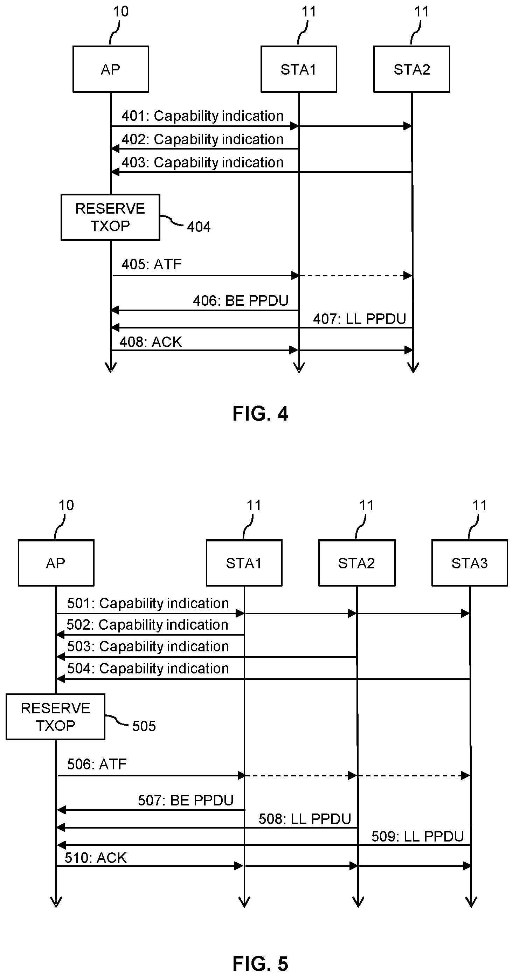

In the example of Fig. 3B, the AP may thus use the ATF to assign full 20 MHz BW to the BE PPDU from STA1 for BE transmissions, and a single 26-tone RU, namely RU1, to a possible overlaid LL PPDU from STA2. When sending the ATF, the AP is aware that the overlaid UL transmission from STA2 may happen on RU1, but does not know if or when exactly in time the overlaid UL transmission will come. This is due to the non-deterministic nature of the LL traffic from STA2. In the example in Fig. 4 it is further assumed that the AP may use the ATF to mandate STA1 to use MCS 0, e.g., BPSK (Binary Phase Shift Keying) with code rate ½, and a transmit power set in such a way that the SINR of the BE PPDU at the AP is enough to decode MCS 0, e.g, SINR(STA1) = -3dB. Further, it is assumed that the AP uses the ATF to mandate STA2 MCS 1, e.g., QPSK (Quadrature Phase Shift Keying) with code rate ½, and a minimum transmit power so that the minimum SINR of the LL PPDU at the AP is enough to decode MCS 1, e.g., SINR(STA2) = 0 dB. With these settings, reliable decoding of both the BE PPDU and the LL PPDU can be ensured.

The selection of BW allocation and transmit parameters in the example of Fig. 3B may be beneficial for the following reasons: STA1 transmits over 20 MHz, while STA2 is only allowed to transmit its data over roughly 1/9 of this BW. This means that when looking at the data parts of the PPDUs, only 1/9 of the BE PPDU is interfered by the LL PPDU. Therefore, selecting a BE code rate ½ provides a very solid protection against this interference. However, when also considering the preamble portion of the LL PPDU, the situations is somewhat different. The preamble portion of the LL PPDU extends over the entire BW allocated to the BE PPDU, so that a code rate of ½ alone might be insufficient to ensure reliable decoding of the BE PPDU. However, selecting MCS 0 for the BE PPDU provides more robustness, so that the BE PPDU can be reliably decoded.

In scenarios like those illustrated in Figs. 3A and 3B, reliable decoding of STA2's UL transmission requires that the corresponding signal received at the AP has a SINR(STA2) which is higher than a threshold corresponding to the selected MCS. In the example of Fig. 3B, STA2 may use MCS 1 and may need an SINR (STA2) ≥ 0dB. Similarly, for STA1 which may use MCS 0, an SINR(STA1) ≥ -3dB may be needed. Accordingly, the AP sets the transmit parameters indicated by the ATF so that SINR(STA2) ≥ 0dB and SINR(STA1) ≥ - 3dB. However, if the AP would be a simple AP, it would not be able to handle any interference coming from the LL PPDU. This would result in loss of all codewords of the BE PPDU which are overlapped in time by the LL PPDU. For a simple AP, the preferable strategy would thus be to allow usage of the entire BW by the LL PPDU.

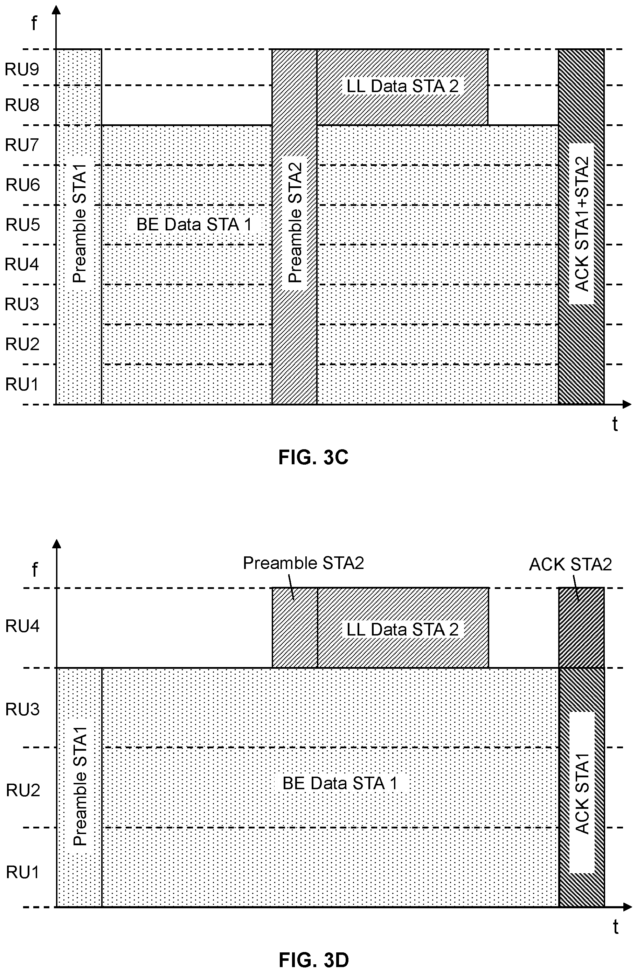

In the examples of Figs. 3C and 3D, STA2 is allowed to transmit the LL PPDU on a part of the BW which at least in part avoids frequency overlap with the BE PPDU transmitted by STA1. In the example of Fig. 3C, RU8 and RU9 are left out from the BW allocated to the transmission of the BE PPDU, and STA2 is allowed to transmit its LL data in RU8 and RU9. However, the preamble portions of the BE PPDU and of the LL PPDU still cover the entire channel BW, so that the preamble portion of the LL PPDU overlaps in frequency with the RUs used of transmission of the data of the BE PPDU. In the example of Fig. 3D, the channel BW is separated into four RUs, denoted as RU1, RU2, RU3, and RU4, e.g., each corresponding to a BW of 20 MHz. RU4 is left out from the BW allocated to the transmission of the BE PPDU, and STA2 is allowed to transmit its LL data in RU4. In this case, also the preamble portion of the LL PPDU is restricted to RU4, i.e., to a part of the channel BW which does not overlap with the BW allocated to the BE PPDU.

As can be further seen from Figs. 3A, 3B, and 3C, the AP also sends an acknowledgement (ACK) to both STA1 and STA2, thereby indicating that it successfully received the BE PPDU from STA1 and the LL PPDU from STA2. In these illustrated examples, the AP sends the acknowledgement as a multi-STA Block ACK, after reception of the BE PPDU. In the example of Fig. 3D, the AP sends a first ACK to STA1, to indicate that it successfully received the BE PPDU from STA1, and a second ACK to STA2, to indicate that it successfully received the LL PPDU from STA2. The first ACK and the second ACK are send on different frequency resources. In particular, the first ACK is sent on RU1, RU2, and RU3, similar to the BE PPDU. The second ACK is sent on RU4, similar to the LL PPDU.

It is noted that the above explanations in connection with Figs. 3B, where the LL PPDU is overlaid over a single 26-tone RU of a 20 MHz channel, may also apply in a corresponding manner to different RU assignments, e.g., when the LL PPDU is overlaid over two or four 26-tone RUs and the BE PPDU still uses code rate ½. If the code rate of the BE PPDU is increased to e.g. 2/3 then the LL PPDU may however be overlaid over only a single RU as described in the example of Fig. 3B.

Furthermore, the above explanations also apply to various BWs of the wireless channel. For example, the EHT technology is expected to enable transmission over 20, 40, 80, 160 and 320 MHz BW of the wireless channel. When using larger BW than 20 MHz, the preamble portion of the triggered PPDU is no longer required to extend over the entire BW of the wireless channel. This has a tendency to reduce the impact of the preamble portion on the interference caused by the overlaid LL PPDU and provides the AP with more freedom to coordinate the overlaid LL PPDU in such a way that the expected interference is reduced. When for example considering a wireless channel of 80 MHz BW, which could for example be a common case in the 5 GHz and 6 GHz frequency bands, the AP could allocate the whole 80 MHz BW to the BE PPDU, and assign only 20 MHz overlaid BW to the LL PPDU, then only ¼ of the overall BW would be overlaid, even when taking into account the preamble portion of the LL PPDU. Alternatively, when for example considering a wireless channel of 80 MHz BW, the AP could allocate 60 MHz to the BE PPDU, and assign the remaining 20 MHz BW to the LL PPDU, then there would be no overlap in frequency domain, even when taking into account the preamble portion of the LL PPDU. Such a scenario is illustrated in Figure 3D.

Fig. 4 shows an example of processes in accordance with the illustrated concepts. The processes of Fig. 4 involve an AP 10, a first station 11 (STA1), and a second station 11 (STA2). The AP 10 and the stations 11 may correspond to any of the APs 10 and stations 11 illustrated in Fig. 1. For example, the AP 10 could correspond to AP1 and the stations 11 may correspond to STA11 and STA21.

As illustrated, in the processes of Fig. 4 the AP 10 first sends a capability indication 401. The capability indication 401 indicates that the AP 10 supports the orchestration of overlaid UL transmissions in accordance with the illustrated concepts. The capability indication 401 may also indicate whether the AP 10 is a simple AP or an enhanced AP. The AP 10 may send the capability indication 401 in a beacon frame, an association frame, a re-association frame, or a probe-response frame. As further illustrated, also the stations 11 each send a capability indication 402, 403. The capability indications 402, 403 indicate that the respective station 11 supports the orchestration of overlaid UL transmissions in accordance with the illustrated concepts, e.g., by being able to interpret the ATF of the illustrated concepts. The stations 11 may send the capability indication in an association-request frame, a re-association-request frame, or a probe-request frame.

At block 404, the AP 10 reserves a TXOP on the wireless channel, e.g., in response to successfully contending for access to the wireless channel.

Then, the AP 10 sends an ATF 405 to the first station 11 (STA1), which is also received by the second station 11 (STA2). The ATF 405 schedules a BE PPDU transmission by the first station 11 and further allows the second station 11 to perform an overlaid UL transmission using radio resources which are at least in part overlapping with radio resources allocated to the BE PPDU.

In response to the ATF 405, the first station 11 sends the scheduled BE PPDU 406. Further, the second station 11 sends an overlaid LL PPDU 407, i.e., an LL PPDU which uses radio resources which are at least in part overlapping with radio resources allocated to the BE PPDU 406.

In the illustrated example, the AP 10 successfully receives the BE PPDU 406 and the overlaid LL PPDU 407. The AP 10 indicates this by sending an acknowledgement 408 to the first station 11 and to the second station 11, e.g., in the form of a multi-STA Block ACK.

Fig. 5 shows a further example of processes in accordance with the illustrated concepts. The processes of Fig. 5 involve an AP 10, a first station 11 (STA1), a second station 11 (STA2), and a station 11 (STA3). The AP 10 and the stations 11 may correspond to any of the APs 10 and stations 11 illustrated in Fig. 1.

As illustrated, in the processes of Fig. 5 the AP 10 first sends a capability indication 501. The capability indication 501 indicates that the AP 10 supports the orchestration of overlaid UL transmissions in accordance with the illustrated concepts. The capability indication 501 may also indicate whether the AP 10 is a simple AP or an enhanced AP. The AP 10 may send the capability indication 501 in a beacon frame, an association frame, a re-association frame, or a probe-response frame. As further illustrated, also the stations 11 each send a capability indication 502, 503, 504. The capability indications 502, 503, 504 indicate that the respective station 11 supports the orchestration of overlaid UL transmissions in accordance with the illustrated concepts, e.g., by being able to interpret the ATF of the illustrated concepts. The stations 11 may send the capability indication in an association-request frame, re-association-request frame, or a probe-request frame.

At block 505, the AP 10 reserves a TXOP on the wireless channel, e.g., in response to successfully contending for access to the wireless channel.

Then, the AP 10 sends an ATF 506 to the first station 11 (STA1), which is also received by the second station 11 (STA2), and the third station 11 (STA3). The ATF 506 schedules a BE PPDU transmission by the first station 11 and further allows the second station 11 and the third station 11 to each perform an overlaid UL transmission on radio resources which are at least in part overlapping with radio resources allocated to the BE PPDU.

In response to the ATF 506, the first station 11 sends the scheduled BE PPDU 507. Further, the second station 11 sends an overlaid LL PPDU 508, and the third station 11 sends an overlaid LL PPDU 509. The overlaid LL PPDUs 508, 509 may use different parts of the radio resources allocated to the BE PPDU 507.

In the illustrated example, the AP 10 successfully receives the BE PPDU 507 and the overlaid LL PPDUs 508, 509. The AP 10 indicates this by sending an acknowledgement 510 to the first station 11, to the second station 11, and to the third station 11, e.g., in the form of a multi-STA Block ACK.

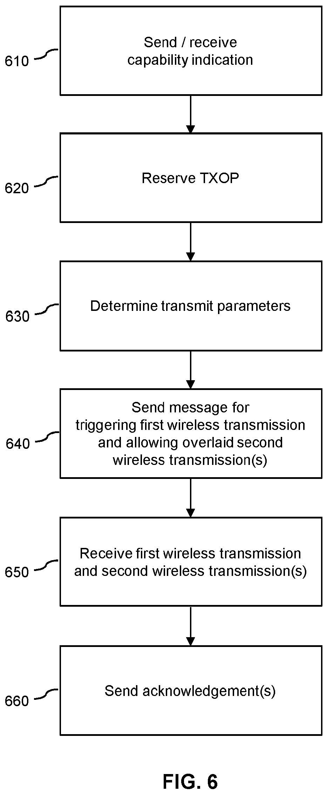

Fig. 6 shows a flowchart for illustrating a method, which may be utilized for implementing the illustrated concepts. The method of Fig. 6 may be used for implementing the illustrated concepts in an AP, e.g., one of the above-mentioned APs 10. The wireless communication system may be based on a wireless local area network, WLAN, technology, e.g., according to the IEEE 802.11 standards family.

If a processor-based implementation of the AP is used, at least some of the steps of the method of Fig. 6 may be performed and/or controlled by one or more processors of the AP. Such AP may also include a memory storing program code for implementing at least some of the below described functionalities or steps of the method of Fig. 6.

At step 610, the AP may send a capability indication. The capability indication indicates a capability of the AP to control a triggered first wireless transmission and a second wireless transmission using radio resources which are at least in part overlapping with radio resources allocated to the first wireless transmission. The overlap may be in the time domain and in some cases also in the frequency domain. The AP may send the indication of the capability in a beacon frame, an association frame, a re-association frame, or a probe-response frame. The capability indication may also indicate whether the AP is a simple AP or an enhanced AP having multiple receive processing chains to handle the overlaid wireless transmissions. As an alternative or in addition, step 610 may involve that the AP receives one or more indications of a respective capability of one or more wireless stations, in particular an indication of a capability to handle a wireless transmission using radio resources which are at least in part overlapping with radio resources allocated to another wireless transmission. The AP may receive the indication(s) in an association-request frame, a re-association-request frame, or a probe-request frame. The wireless station(s) sending the indication may for example correspond to any of the above-mentioned stations 11.

At step 620, the AP reserves a TXOP on a wireless channel. This may involve that the AP contends for access to the wireless channel, e.g., by performing an LBT (Listen Before Talk) or CCA (Clear Channel Assessment) procedure.

At step 630, the AP determines, for a wireless station associated with the AP, a first set of one or more transmit parameters to be applied in a first wireless transmission from the wireless station to the AP. The first wireless station may for example correspond to any of the above-mentioned stations 11. The first set of one or more transmit parameters may for example include an MCS, and/or a transmit power, and/or one or more RUs allocated to the first wireless transmission. Further, the AP may determine a second set of one or more transmit parameters to be applied in a second wireless transmission from at least one additional wireless station to the AP. The at least one additional wireless station may for example correspond to the wireless station which, in step 610, provided the indication of the capability to handle a wireless transmission using radio resources which are at least in part overlapping with radio resources allocated to another wireless transmission. The second set of one or more transmit parameters may for example include an MCS, and/or a transmit power. Further, the second set of one or more transmit parameters may indicate one or more RUs allowed to be overlapped by the second wireless transmission. Further, the second set of one or more transmit parameters may include a maximum duration of the second wireless transmission. In response to detecting a need for the first wireless transmission, the access point may determine the first set of one or more transmit parameters and the second set of one or more transmit parameters taking into account a possible occurrence of the second wireless transmission from the at least one additional wireless station.

Accordingly, the first set of one or more transmit parameters may include a first set of one or more RUs defined by OFDM, and the second set of one or more transmit parameters may include a second set of one or more RUs defined by OFDM. The second set of one or more RUs may at least in part overlap with the first set of one or more first RUs. In some scenarios, the second set of one or more RUs may be a subset of the first set of one or more RUs. In other scenarios, the second set of one or more RUs may be distinct from the first set of one or more RUs.

Further, the first set of one or more transmit parameters may include one or more first spatial streams, and the second set of one or more transmit parameters may include one or more second spatial streams. The second spatial streams may be different from the first spatial streams.

Further, the first set of one or more transmit parameters may include a first MCS, and the second set of one or more transmit parameters may include a second MCS. The second MCS may be different from the first MCS.

Further, the first set of one or more transmit parameters may include a first transmit power, and the second set of one or more transmit parameters may include a second transmit power. The second transmit power may be different from the first transmit power.

At step 640, the AP sends a message for triggering the first wireless transmission by the wireless station. The message indicates the first set of one or more transmit parameters. Further, the message indicates a second set of one or more transmit parameters, e.g., as determined at step 630, and that at least one additional wireless station receiving the message is allowed to perform a second wireless transmission in the TXOP for a duration smaller than the first wireless transmission and using the indicated second set of one or more transmit parameters and radio resources which are at least in part overlapping with radio resources allocated to the first wireless transmission. The above-mentioned ATF is an example of such message.

The second wireless transmission may start after the first wireless transmission. Further, the second wireless transmission may end before the first wireless transmission. OFDM symbols of the second wireless transmission may be time-aligned with OFDM symbols of the first wireless transmission.

In some scenarios, the first wireless transmission and the second wireless transmission each include a preamble part and a data part. In such case, the preamble part of the first wireless transmission and the preamble part of the second wireless transmission may be non-overlapping in time.

The second wireless transmission may correspond to low-latency traffic. The first wireless transmission may correspond to best-effort traffic.

At step 650, the AP may receive the first wireless transmission and the second wireless transmission. In some scenarios, the AP may receive the first wireless transmission by a first receive processing chain of the AP and receive the second wireless transmission by a second receive processing chain of the AP.

At step 660, the AP may send an acknowledgement indicating whether the second wireless transmission was correctly received by the AP. This may be accomplished after the first wireless transmission.

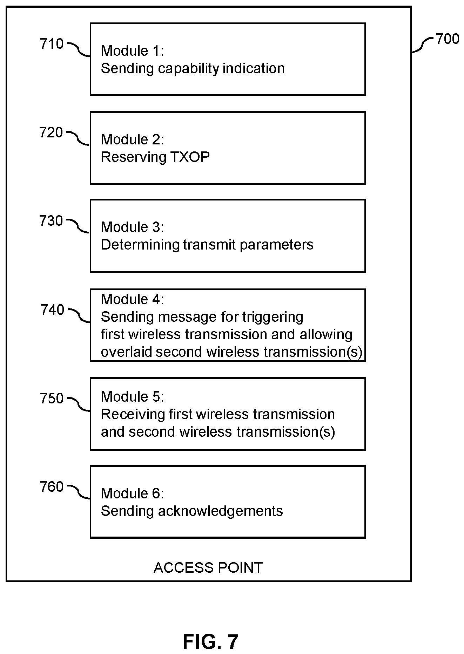

Fig. 7 shows a block diagram for illustrating functionalities of an AP 700 which operates according to the method of Fig. 6. The AP 700 may for example correspond to one of above-mentioned APs 10. As illustrated, the AP 700 may be provided with a module 710 configured to send and/or receive a capability indication, such as explained in connection with step 610. Further, the AP 700 may be provided with a module 720 configured to reserve a TXOP, such as explained in connection with step 620. Further, the AP 700 may be provided with a module 730 configured to determine transmit parameters, such as explained in connection with step 630. Further, the AP 700 may be provided with a module 740 configured to send a message for triggering a first wireless transmission and allowing overlaying of a second wireless transmission, such as explained in connection with step 640. Further, the AP 700 may be provided with a module 750 configured to receive a first wireless transmission and an overlaid second wireless transmission, such as explained in connection with step 650. Further, the AP 700 may be provided with a module 760 configured to send an acknowledgement, such as explained in connection with step 660.

It is noted that the AP 700 may include further modules for implementing other functionalities, such as known functionalities of a WLAN AP. Further, it is noted that the modules of the AP 700 do not necessarily represent a hardware structure of the AP 700, but may also correspond to functional elements, e.g., implemented by hardware, software, or a combination thereof.

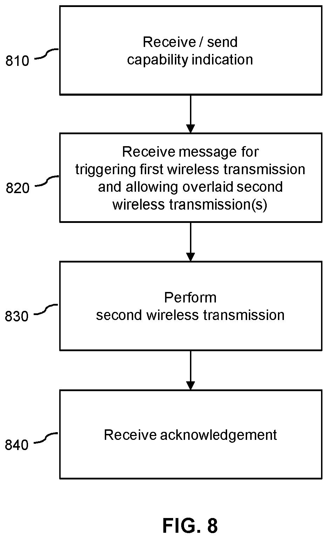

Fig. 8 shows a flowchart for illustrating a method, which may be utilized for implementing the illustrated concepts. The method of Fig. 8 may be used for implementing the illustrated concepts in a wireless station, such as one of the above-mentioned stations 11. The wireless communication system may be based on a wireless local area network, WLAN, technology, e.g., according to the IEEE 802.11 standards family.

If a processor-based implementation of the wireless station is used, at least some of the steps of the method of Fig. 8 may be performed and/or controlled by one or more processors of the wireless station. Such wireless device may also include a memory storing program code for implementing at least some of the below described functionalities or steps of the method of Fig. 8.

At step 810, the wireless station may receive a capability indication from an AP. The capability indication indicates a capability of the AP to control a triggered first wireless transmission and a second wireless transmission using radio resources which are at least in part overlapping with radio resources allocated to the first wireless transmission. The overlap may be in the time domain and in some cases also in the frequency domain. The wireless station may receive the indication of the capability in a beacon frame, an association frame, a re-association frame, or a probe-response frame. The capability indication may also indicate whether the AP is a simple AP or an enhanced AP having multiple receive processing chains to handle the overlaid wireless transmissions. As an alternative or in addition, step 810 may involve that the wireless station sends an indication of a capability of the wireless station, in particular an indication of a capability to handle a wireless transmission using radio resources which are at least in part overlapping with radio resources allocated to another wireless transmission. The wireless station may send the indication in an association-request frame, a re-association-request frame, or a probe-request frame.

At step 820, the wireless station receives, from an AP of the wireless communication system, such as any of the above-mentioned APs 10, a message for triggering a first wireless transmission by another wireless station. The message indicates a first set of one or more transmit parameters to be used by the other wireless station when performing the first wireless transmission. Further, the message indicates a second set of one or more transmit parameters and that the wireless station is allowed to perform a second wireless transmission in the TXOP for a duration smaller than the first wireless transmission and using the indicated second set of one or more transmit parameters and radio resources which are at least in part overlapping with radio resources allocated to the first wireless transmission.

The first set of one or more transmit parameters may for example include an MCS, and/or a transmit power, and/or one or more RUs allocated to the first wireless transmission. Further, the AP may determine a second set of one or more transmit parameters to be applied in a second wireless transmission from at least one additional wireless station to the AP. The second set of one or more transmit parameters may for example include an MCS, and/or a transmit power. Further, the second set of one or more transmit parameters may indicate one or more RUs allowed to be overlapped by the second wireless transmission. Further, the second set of one or more transmit parameters may include a maximum duration of the second wireless transmission. In response to detecting a need for the first wireless transmission, the access point may determine the first set of one or more transmit parameters and the second set of one or more transmit parameters taking into account a possible occurrence of the second wireless transmission from the at least one additional wireless station.

Accordingly, the first set of one or more transmit parameters may include a first set of one or more RUs defined by OFDM, and the second set of one or more transmit parameters may include a second set of one or more RUs defined by OFDM. The second set of one or more RUs may at least in part overlap with the first set of one or more first RUs. In some scenarios, the second set of one or more RUs may be a subset of the first set of one or more RUs. In other scenarios, the second set of one or more RUs may be distinct from the first set of one or more RUs.

Further, the first set of one or more transmit parameters may include one or more first spatial streams, and the second set of one or more transmit parameters may include one or more second spatial streams. The second spatial streams may be different from the first spatial streams.

Further, the first set of one or more transmit parameters may include a first MCS, and the second set of one or more transmit parameters may include a second MCS. The second MCS may be different from the first MCS.

Further, the first set of one or more transmit parameters may include a first transmit power, and the second set of one or more transmit parameters may include a second transmit power. The second transmit power may be different from the first transmit power.

At step 830, in response to the message of step 820, the wireless station performs the second wireless transmission in the TXOP with a duration smaller than the first wireless transmission and using the indicated second set of one or more transmit parameters on radio resources which are at least in part overlapping with radio resources allocated to the first wireless transmission.

The second wireless transmission may start after the first wireless transmission. Further, the second wireless transmission may end before the first wireless transmission. OFDM symbols of the second wireless transmission may be time-aligned with OFDM symbols of the first wireless transmission.

In some scenarios, the first wireless transmission and the second wireless transmission each include a preamble part and a data part. In such case, the preamble part of the first wireless transmission and the preamble part of the second wireless transmission may be non-overlapping in time.

The second wireless transmission may correspond to low-latency traffic. The first wireless transmission may correspond to best-effort traffic.

At step 840, the AP may receive an acknowledgement indicating whether the second wireless transmission was correctly received by the AP. This may be accomplished after the first wireless transmission.

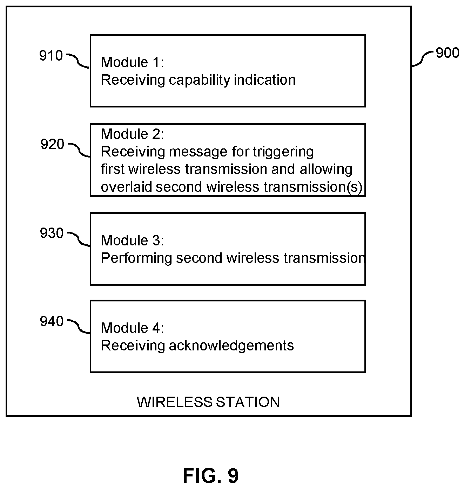

Fig. 9 shows a block diagram for illustrating functionalities of a wireless station 900 which operates according to the method of Fig. 8. The wireless station 900 may for example correspond to one of the above-mentioned stations 11. As illustrated, the wireless station 900 may be provided with a module 910 configured to receive and/or send a capability indication, such as explained in connection with step 810. Further, the wireless station 900 may be provided with a module 920 configured to receive a message for triggering first wireless transmission and allowing overlaid second wireless transmission(s), such as explained in connection with step 820. Further, the wireless station 900 may be provided with a module 930 configured to perform the second wireless transmission, such as explained in connection with step 830. Further, the wireless station 900 may be provided with a module 940 configured to receive an acknowledgement, such as explained in connection with step 840.

It is noted that the wireless station 900 may include further modules for implementing other functionalities, such as known functionalities of a WLAN STA. Further, it is noted that the modules of the wireless station 900 do not necessarily represent a hardware structure of the wireless station 900, but may also correspond to functional elements, e.g., implemented by hardware, software, or a combination thereof.

It is noted that the functionalities as described in connection with Figs. 6 to 9 could also be implemented in a system, e.g., a system including an AP operating according to the method of Fig. 6 and one or more wireless stations operating according to the method of Fig. 8 and corresponding to the additional wireless station(s) in the method of Fig. 6.

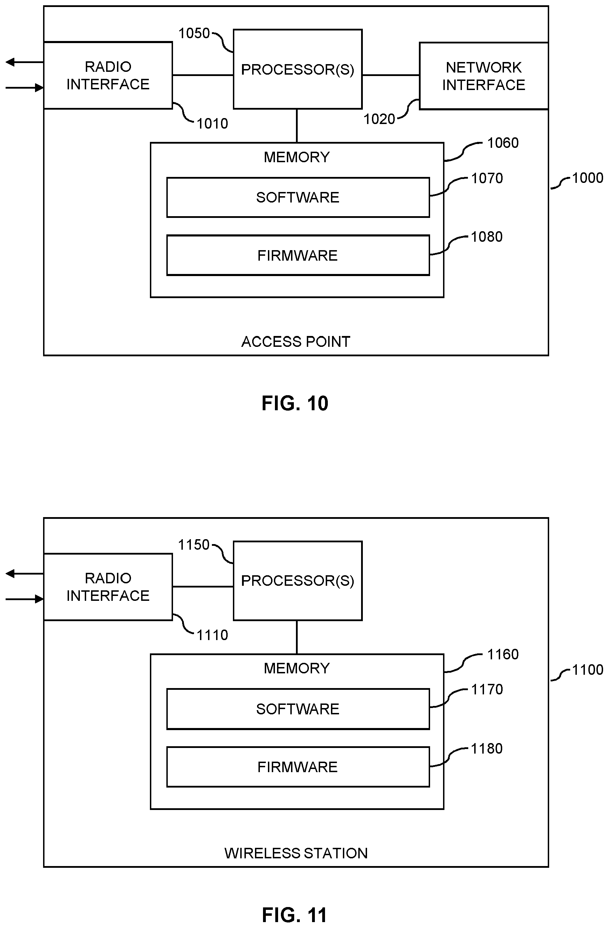

Fig. 10 illustrates a processor-based implementation of an AP 1000. The structures as illustrated in Fig. 10 may be used for implementing the above-described concepts. The AP 1000 may for example correspond to one of above-mentioned APs 10.

As illustrated, the AP 1000 includes a radio interface 1010. The radio interface 1010 may for example be based on a WLAN technology, e.g., according to an IEEE 802.11 family standard. However, other wireless technologies could be supported as well, e.g., the LTE technology or the NR technology. In some cases, the radio interface may comprise multiple transmit and receive processing chains. In some scenarios, the radio interface 1010 may be based on multiple antennas of the AP 1000 and support beamformed multi-antenna port transmission to enable spatial multiplexing of wireless transmissions, i.e., usage of multiple spatial streams. Further, the AP 1000 may be provided with a network interface 1020 for connecting to a data network, e.g., using a wire-based connection.

Further, the AP 1000 may include one or more processors 1050 coupled to the radio interface 1010 and a memory 1060 coupled to the processor(s) 1050. By way of example, the radio interface 1010, the processor(s) 1050, and the memory 1060 could be coupled by one or more internal bus systems of the AP 1000. The memory 1060 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 1060 may include software 1070 and/or firmware 1080. The memory 1060 may include suitably configured program code to be executed by the processor(s) 1050 so as to implement the above-described functionalities for controlling wireless transmissions, such as explained in connection with Fig. 6.

It is to be understood that the structures as illustrated in Fig. 10 are merely schematic and that the AP 1000 may actually include further components which, for the sake of clarity, have not been illustrated, e.g., further interfaces or further processors. Also, it is to be understood that the memory 1060 may include further program code for implementing known functionalities of a WLAN AP. According to some embodiments, also a computer program may be provided for implementing functionalities of the AP 1000, e.g., in the form of a physical medium storing the program code and/or other data to be stored in the memory 1060 or by making the program code available for download or by streaming.

Fig. 11 illustrates a processor-based implementation of a wireless station 1100. The structures as illustrated in Fig. 11 may be used for implementing the above-described concepts. The wireless station 1100 may for example correspond to one of above-mentioned stations 11.

As illustrated, the wireless station 1100 includes a radio interface 1110. The radio interface 1010 may for example be based on a WLAN technology, e.g., according to an IEEE 802.11 family standard. However, other wireless technologies could be supported as well, e.g., the LTE technology or the NR technology. In some scenarios, the radio interface 1110 may be based on multiple antennas of the wireless station 1100 and support beamformed multi-antenna port transmission to enable spatial multiplexing of wireless transmissions, i.e., usage of multiple spatial streams.

Further, the wireless station 1100 may include one or more processors 1150 coupled to the radio interface 1110 and a memory 1160 coupled to the processor(s) 1150. By way of example, the radio interface 1110, the processor(s) 1150, and the memory 1160 could be coupled by one or more internal bus systems of the wireless station 1100. The memory 1160 may include a ROM, e.g., a flash ROM, a RAM, e.g., a DRAM or SRAM, a mass storage, e.g., a hard disk or solid state disk, or the like. As illustrated, the memory 1160 may include software 1170 and/or firmware 1180. The memory 1160 may include suitably configured program code to be executed by the processor(s) 1150 so as to implement the above-described functionalities for controlling wireless transmissions, such as explained in connection with Fig. 8.

It is to be understood that the structures as illustrated in Fig. 11 are merely schematic and that the wireless station 1100 may actually include further components which, for the sake of clarity, have not been illustrated, e.g., further interfaces or further processors. Also, it is to be understood that the memory 1160 may include further program code for implementing known functionalities of a WLAN STA. According to some embodiments, also a computer program may be provided for implementing functionalities of the wireless station 1100, e.g., in the form of a physical medium storing the program code and/or other data to be stored in the memory 1160 or by making the program code available for download or by streaming.

As can be seen, the concepts as described above may be used for efficiently enabling low-latency transmissions and/or bounded latency transmissions. Whenever the AP has the necessary computational capabilities and hardware support, it may orchestrate the operation in its BSS so that critical transmissions do not experience long channel access delays, while best-effort transmissions experience minimal losses in throughput due to the overlaid critical transmissions. If the AP does not fulfill the requirements for enhanced operation, it can still orchestrate the operation in its BSS to a certain extent to minimize the interference effects of the overlaid transmissions.

It is to be understood that the examples and embodiments as explained above are merely illustrative and susceptible to various modifications. For example, if there overlaid wireless transmissions have at least some overlap in the frequency domain, the second wireless transmission, which is overlaid to the scheduled wireless transmission, could also be allowed to have the same duration as the scheduled wireless transmission, i.e., the requirement that the second wireless transmission has a shorter duration than the first wireless transmission could be omitted. Further, the illustrated concepts may be applied in connection with various kinds of wireless technologies, without limitation to WLAN technologies. Further, the concepts may be applied with respect to various types of APs and STAs. Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

## Claims

1. A method of controlling wireless transmissions in a wireless communication system, the method comprising:
an access point (10; 700; 1000) of the wireless communication system reserving a transmission opportunity, TXOP, on a wireless channel;
the access point (10; 700; 1000) determining, for a wireless station (11; 900; 1100) associated with the access point (10; 700; 1000), a first set of one or more transmit parameters to be applied in a scheduled first wireless transmission from the wireless station (11; 900; 1100) to the access point (10; 700; 1000);
the access point (10; 700; 1000) sending a message (405; 506) for triggering the first wireless transmission by the wireless station (11; 900; 1100), the message (405; 506) indicating the first set of one or more transmit parameters, and further indicating a second set of one or more transmit parameters and that at least one additional wireless station (11; 900; 1100) receiving the message (405; 506) is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling.

2. The method according to claim 1, comprising:
in response to detecting a need for the first wireless transmission, the access point (10; 700; 1000) determining the first set of one or more transmit parameters and the second set of one or more transmit parameters taking into account a possible occurrence of the second wireless transmission from the at least one additional wireless station (11; 900; 1100).

3. The method according to claim 1 or 2,
wherein the first set of one or more transmit parameters comprises a first set of one or more resource units defined by orthogonal frequency division multiplexing, OFDM,
wherein the second set of one or more transmit parameters comprises a second set of one or more resource units defined by OFDM, the second set of one or more resource units being at least in part overlapping with the first set of one or more first resource units, and
wherein the second set of one or more resource units is a subset of the first set of one or more resource units.

4. The method according to any one of the preceding claims,
wherein the first set of one or more transmit parameters comprises one or more first spatial streams and the second set of one or more transmit parameters comprises one or more second spatial streams, and/or
wherein the first set of one or more transmit parameters comprises a first modulation and coding scheme and the second set of one or more transmit parameters comprises second modulation and coding scheme, and/or
wherein the first set of one or more transmit parameters comprises a first transmit power and the second set of one or more transmit parameters comprises a second transmit power, and/or wherein the second set of one or more transmit parameters comprises a maximum duration of the second wireless transmission.

5. The method according to any one of the preceding claims,
wherein the second wireless transmission starts after the first wireless transmission, and/or
wherein the second wireless transmission ends before the first wireless transmission, and/or
wherein OFDM symbols of the second wireless transmission are time-aligned with OFDM symbols of the first wireless transmission, and/or
wherein the first wireless transmission and the second wireless transmission each comprise a preamble part and a data part, wherein the preamble part of the first wireless transmission and the preamble part of the second wireless transmission are non-overlapping in time.

6. The method according to any one of the preceding claims, comprising:
after the first wireless transmission, the access point (10; 700; 1000) sending an acknowledgement indicating whether the second wireless transmission was correctly received by the access point (10; 700; 1000).

7. The method according to any one of the preceding claims, comprising:
the access point (10; 700; 1000) receiving the first wireless transmission by a first receive processing chain of the access point (10; 700; 1000); and
the access point (10; 700; 1000) receiving the second wireless transmission by a second receive processing chain of the access point (10; 700; 1000).

8. The method according to any one of the preceding claims,
wherein the second wireless transmission corresponds to low-latency traffic, and/or
wherein the first wireless transmission corresponds to best-effort traffic.

9. The method according to any one of the preceding claims, comprising:
the access point (10; 700; 1000) sending an indication of a capability of the access point (10; 700; 1000) to control the first wireless transmission and the second wireless transmission, wherein the access point (10; 700; 1000) sends the indication of the capability in a beacon frame, an association-response frame, a re-association-response frame, or a probe-response frame; and/or
the access point (10; 700; 1000) receiving an indication of a capability of the at least one additional wireless station (11; 900; 1100) to interpret receiving the message (405; 506) and to handle the second wireless transmission,
wherein the access point (10; 700; 1000) receives the indication of the capability in an association-request frame, re-association-request frame, or a probe-request frame.

10. The method according to any one of the preceding claims,
wherein the wireless communication system is based on a Wireless Local Area Network technology according to the IEEE 802.11 standards family.

11. A method of controlling wireless transmissions in a wireless communication system, the method comprising:
a wireless station (11; 900; 1100) receiving, from an access point (10; 700; 1000) of the wireless communication system, a message (403; 503) for triggering a scheduled first wireless transmission by another wireless station (11; 900; 1100) in a TXOP reserved by the access point (10; 700; 1000), the message (403; 503) indicating a first set of one or more transmit parameters to be used by the other wireless station (11; 900; 1100) when performing the first wireless transmission and further indicating a second set of one or more transmit parameters and that the wireless station (11; 900; 1100) is allowed to perform a second wireless transmission in the TXOP for a duration smaller than the first wireless transmission and using the indicated second set of one or more transmit parameters and radio resources which are at least in part overlapping with radio resources allocated to the first wireless transmission; and in response to the message (403; 503), the wireless station (11; 900; 1100) performing the second wireless transmission in the TXOP with a duration smaller than the first wireless transmission and using the indicated second set of one or more transmit parameters on radio resources which are at least in part overlapping with radio resources allocated to the first wireless transmission, wherein the second wireless transmission does not require scheduling.

12. The method according to claim 11,
wherein the first set of one or more transmit parameters comprises one or more resource units defined by orthogonal frequency division multiplexing, OFDM, on the wireless channel,
wherein the second set of one or more transmit parameters comprises a second set of one or more resource units defined by OFDM, the second set of one or more resource units being at least in part overlapping with the first set of one or more first resource units, and
wherein the second set of one or more resource units is a subset of the first set of one or more resource units.

13. The method according to claim 11 or 12,
wherein the first set of one or more transmit parameters comprises one or more first spatial streams and the first set of one or more transmit parameters comprises one or more second spatial streams, and/or
wherein the first set of one or more transmit parameters comprises a first modulation and coding scheme and the second set of one or more transmit parameters comprises a second modulation and coding scheme, and/or
wherein the first set of one or more transmit parameters comprises a first transmit power and the second set of one or more transmit parameters comprises a second transmit power, and/or wherein the second set of one or more transmit parameters comprises a maximum duration of the second wireless transmission.

14. The method according to any one of claims 11 to 13,
wherein the second wireless transmission starts after the first wireless transmission, and/or
wherein the second wireless transmission ends before the first wireless transmission, and/or
wherein OFDM symbols of the second wireless transmission are time-aligned with OFDM symbols of the first wireless transmission, and/or
wherein the first wireless transmission and the second wireless transmission each comprise a preamble part and a data part, wherein the preamble part of the first wireless transmission and the preamble part of the second wireless transmission are non-overlapping in time.

15. The method according to any one of claims 11 to 14, comprising:
after the first wireless transmission, the wireless station (11; 900; 1100) receiving an acknowledgement indicating whether the second wireless transmission was correctly received by the access point (10; 700; 1000).

16. The method according to any one of claims 11 to 15, comprising:
the wireless station (11; 900; 1100) receiving an indication of a capability of the access point (10; 700; 1000) to control the first wireless transmission and the second wireless transmission and sending the second wireless transmission based on the received indication of the capability,
wherein the wireless station (11; 900; 1100) receives the indication of the capability in a beacon frame, an association frame, a re-association frame, or a probe-response frame; and/or
the wireless station (11; 900; 1100) sending an indication of a capability of the wireless station (11; 900; 1100) to interpret receiving the message (405; 506) and to handle the second wireless transmission,
wherein the access point (10; 700; 1000) sends the indication of the capability in an association-request frame, re-association-request frame, or a probe-request frame.

17. The method according to any one of claims 11 to 16,
wherein the wireless communication system is based on a Wireless Local Area Network technology according to the IEEE 802.11 standards family.

18. An access point (10; 700; 1000) for a wireless communication system, the access point (10; 700; 1000) being configured to:
reserve a transmission opportunity, TXOP, on a wireless channel;
determine, for a wireless station (11; 900; 1100) associated with the access point (10; 700; 1000), a first set of one or more transmit parameters to be applied in a scheduled first wireless transmission from the wireless station (11; 900; 1100) to the access point (10; 700; 1000);
send a message (403; 503) for triggering the first wireless transmission by the wireless station (11; 900; 1100), the message (403; 503) indicating the first set of one or more transmit parameters, and further indicating a second set of one or more transmit parameters and that at least one additional wireless station (11; 900; 1100) receiving the message (403; 503) is allowed to perform a second wireless transmission in the TXOP for a duration smaller than the first wireless transmission and using the indicated second set of one or more transmit parameters and radio resources which are at least in part overlapping with radio resources allocated to the first wireless transmission, wherein the second wireless transmission does not require scheduling.

19. The access point (10; 700; 1000) according to claim 18,
wherein the access point (10; 700; 1000) is configured to perform a method according to any one of claims 2 to 10.

20. A wireless station (11; 900; 1100) for a wireless communication system, the wireless station (11; 900; 1100) being configured to:
receive, from an access point (10; 700; 1000) of the wireless communication system, a message (403; 503) for triggering a scheduled first wireless transmission by another wireless station (11; 900; 1100) in a TXOP reserved by the access point (10; 700; 1000), the message (403; 503) indicating a first set of one or more transmit parameters to be used by the other wireless station (11; 900; 1100) when performing the first wireless transmission and further indicating a second set of one or more transmit parameters and that the wireless station (11; 900; 1100) is allowed to perform a second wireless transmission in the TXOP for a duration smaller than the first wireless transmission and using the indicated second set of one or more transmit parameters and radio resources which are at least in part overlapping with radio resources allocated to the first wireless transmission; and
in response to the message (403; 503), perform the second wireless transmission in the TXOP with a duration smaller than the first wireless transmission and using the indicated second set of one or more transmit parameters on radio resources which are at least in part overlapping with radio resources allocated to the first wireless transmission, wherein the second wireless transmission does not require scheduling.

21. The wireless station (11; 900; 1100) according to claim 20,
wherein the wireless station (11; 900; 1100) is configured to perform a method according to any one of claims 12 to 17.

22. A computer program or computer program product comprising:
program code to be executed by at least one processor (1050) of an access point (10; 700; 1000), whereby execution of the program code causes the access point (10; 700; 1000) to perform a method according to any one of claims 1 to 10, or
program code to be executed by at least one processor (1150) of a wireless station (11; 900; 1100), whereby execution of the program code causes the wireless station (11; 900; 1100) to perform a method according to any one of claims 11 to 17.

## Patentansprüche

1. Verfahren zur Steuerung von Drahtlosübertragungen in einem Drahtloskommunikationssystem, wobei das Verfahren umfasst, dass:
ein Zugangspunkt (10; 700; 1000) des Drahtloskommunikationssystems eine Übertragungs-gelegenheit, TXOP, auf einem Drahtloskanal reserviert;
der Zugangspunkt (10; 700; 1000) für eine drahtlose Station (11; 900; 1100), die mit dem Zugangspunkt (10; 700; 1000) assoziiert ist, einen ersten Satz eines oder mehrerer Sendeparameter bestimmt, der in einer disponierten ersten Drahtlosübertragung von der drahtlosen Station (11; 900; 1100) an den Zugangspunkt (10; 700; 1000) angewendet werden soll;
der Zugangspunkt (10; 700; 1000) eine Nachricht (405; 506) zum Auslösen der ersten Drahtlosübertragung durch die drahtlose Station (11; 900; 1100) sendet, wobei die Nachricht (405; 506) den ersten Satz eines oder mehrerer Sendeparameter angibt und ferner einen zweiten Satz eines oder mehrerer Sendeparameter angibt und, dass mindestens eine zusätzliche drahtlose Station (11; 900; 1100), die die Nachricht (405; 506) empfängt, eine zweite Drahtlosübertragung bei der TXOP für eine Dauer, die kürzer als die erste Drahtlosübertragung ist, und unter Verwendung des angegebenen zweiten Satzes eines oder mehrerer Sendeparameter und von Funkressourcen durchführen darf, die sich zumindest teilweise mit Funkressourcen überlappen, die der ersten Drahtlosübertragung zugewiesen sind, wobei die zweite Drahtlosübertragung kein Disponieren erfordert.

2. Verfahren nach Anspruch 1, umfassend, dass:
der Zugangspunkt (10; 700; 1000) in Reaktion auf ein Erkennen einer Notwendigkeit der ersten Drahtlosübertragung den ersten Satz eines oder mehrerer Sendeparameter und den zweiten Satz eines oder mehrerer Sendeparameter unter Berücksichtigung eines möglichen Auftretens der zweiten Drahtlosübertragung von der mindestens einen zusätzlichen drahtlosen Station (11; 900; 1100) bestimmt.

3. Verfahren nach Anspruch 1 oder 2,
wobei der erste Satz eines oder mehrerer Sendeparameter einen ersten Satz einer oder mehrerer Ressourceneinheiten umfasst, die durch orthogonales Frequenzmultiplex, OFDM, definiert sind,
wobei der zweite Satz eines oder mehrerer Sendeparameter einen zweiten Satz einer oder mehrerer durch OFDM definierten Ressourceneinheiten umfasst, wobei der zweite Satz einer oder mehrerer Ressourceneinheiten sich zumindest teilweise mit dem ersten Satz einer oder mehrerer Ressourceneinheiten überlappt, und
wobei der zweite Satz einer oder mehrerer Ressourceneinheiten eine Teilmenge des ersten Satzes einer oder mehrerer Ressourceneinheiten ist.

4. Verfahren nach einem der vorhergehenden Ansprüche,
wobei der erste Satz eines oder mehrerer Sendeparameter einen oder mehrere erste räumliche Ströme umfasst und der zweite Satz eines oder mehrerer Sendeparameter einen oder mehrere zweite räumliche Ströme umfasst und/oder
wobei der erste Satz eines oder mehrerer Sendeparameter ein erstes Modulations- und Codierungsschema umfasst und der zweite Satz ein zweites Modulations- und Codierungsschema umfasst und/oder
wobei der erste Satz eines oder mehrerer Sendeparameter eine erste Sendeleistung umfasst und der zweite Satz eines oder mehrerer Sendeparameter eine zweite Sendeleistung umfasst und/oder
wobei der zweite Satz eines oder mehrerer Sendeparameter eine maximale Dauer der zweiten Drahtlosübertragung umfasst.

5. Verfahren nach einem der vorhergehenden Ansprüche,
wobei die zweite Drahtlosübertragung nach der ersten Drahtlosübertragung beginnt und/oder
wobei die zweite Drahtlosübertragung vor der ersten Drahtlosübertragung endet und/oder
wobei OFDM-Signale der zweiten Drahtlosübertragung mit OFDM-Symbolen der ersten Drahtlosübertragung zeitlich abgeglichen sind und/oder
wobei die erste Drahtlosübertragung und die zweite Drahtlosübertragung jeweils einen Präambelteil und einen Datenteil umfassen, wobei der Präambelteil der ersten Drahtlosübertragung und der Präambelteil der zweiten Drahtlosübertragung sich zeitlich nicht überlappen.

6. Verfahren nach einem der vorhergehenden Ansprüche, umfassend, dass:
der Zugangspunkt (10; 700; 1000) nach der ersten Drahtlosübertragung eine Bestätigung sendet, die angibt, ob die zweite Drahtlosübertragung durch den Zugangspunkt (10; 700; 1000) korrekt empfangen wurde.

7. Verfahren nach einem der vorhergehenden Ansprüche, umfassend, dass:
der Zugangspunkt (10; 700; 1000) die erste Drahtlosübertragung durch eine erste Empfangsverarbeitungskette des Zugangspunkts (10; 700; 1000) empfängt; und
der Zugangspunkt (10; 700; 1000) die zweite Drahtlosübertragung durch eine zweite Empfangsverarbeitungskette des Zugangspunkts (10; 700; 1000) empfängt.

8. Verfahren nach einem der vorhergehenden Ansprüche,
wobei die zweite Drahtlosübertragung Verkehr mit niedriger Latenz entspricht und/oder
wobei die erste Drahtlosübertragung Best-Effort-Verkehr entspricht.

9. Verfahren nach einem der vorhergehenden Ansprüche, umfassend, dass:
der Zugangspunkt (10; 700; 1000) eine Angabe einer Fähigkeit des Zugangspunkts (10; 700; 1000) zum Steuern der ersten Drahtlosübertragung und der zweiten Drahtlosübertragung sendet, wobei der Zugangspunkt (10; 700; 1000) die Angabe der Fähigkeit in einem Beacon-Rahmen, einem Assoziationsantwortrahmen, einem Reassoziationsantwortrahmen oder einem Sondenantwortrahmen sendet; und/oder
der Zugangspunkt (10; 700; 1000) eine Angabe einer Fähigkeit der mindestens einen zusätzlichen drahtlosen Station (11; 900; 1100) zum Interpretieren des Empfangs der Nachricht (405; 506) und zum Handhaben der zweiten Drahtlosübertragung empfängt,
wobei der Zugangspunkt (10; 700; 1000) die Angabe der Fähigkeit in einem Assoziationsantwortrahmen, einem Reassoziationsantwortrahmen oder einem Sondenantwortrahmen empfängt.

10. Verfahren nach einem der vorhergehenden Ansprüche,
wobei das Drahtloskommunikationssystem auf einer Wireless Local Area Network-Technologie gemäß der IEEE 802.11-Standardfamilie basiert.

11. Verfahren zur Steuerung von Drahtlosübertragungen in einem Drahtloskommunikationssystem, wobei das Verfahren umfasst, dass:
eine drahtlose Station (11; 900; 1100) von einem Zugangspunkt (10; 700; 1000) des Drahtloskommunikationssystems eine Nachricht (403; 503) zum Auslösen einer disponierten ersten Drahtlosübertragung durch eine andere drahtlose Station (11; 900; 1100) bei einer vom Zugangspunkt (10; 700; 1000) reservierten TXOP empfängt, wobei die Nachricht (403; 503) einen ersten Satz eines oder mehrerer Sendeparameter angibt, der von der anderen drahtlosen Station (11; 900; 1100) beim Durchführen der ersten Drahtlosübertragung verwendet werden soll, und ferner einen zweiten Satz eines oder mehrerer Sendeparameter angibt und, dass die drahtlose Station (11; 900; 1100) eine zweite Drahtlosübertragung bei der TXOP für eine Dauer, die kürzer als die erste Drahtlosübertragung ist, und unter Verwendung des angegebenen zweiten Satzes eines oder mehrerer Sendeparameter und von Funkressourcen durchführen darf, die sich zumindest teilweise mit Funkressourcen überlappen, die der ersten Drahtlosübertragung zugewiesen sind; und
die drahtlose Station (11; 900; 1100) in Reaktion auf die Nachricht (403; 503) die zweite Drahtlosübertragung bei der TXOP mit einer Dauer, die kürzer als die erste Drahtlosübertragung ist, und unter Verwendung des angegebenen zweiten Satzes eines oder mehrerer Sendeparameter auf Funkressourcen durchführt, die sich zumindest teilweise mit Funkressourcen überlappen, die der ersten Drahtlosübertragung zugewiesen sind, wobei die zweite Drahtlosübertragung kein Disponieren erfordert.

12. Verfahren nach Anspruch 11,
wobei der erste Satz eines oder mehrerer Sendeparameter einen ersten Satz einer oder mehrerer Ressourceneinheiten umfasst, die durch orthogonales Frequenzmultiplex, OFDM, definiert sind,
wobei der zweite Satz eines oder mehrerer Sendeparameter einen zweiten Satz einer oder mehrerer durch OFDM definierten Ressourceneinheiten umfasst, wobei der zweite Satz einer oder mehrerer Ressourceneinheiten sich zumindest teilweise mit dem ersten Satz einer oder mehrerer Ressourceneinheiten überlappt, und
wobei der zweite Satz einer oder mehrerer Ressourceneinheiten eine Teilmenge des ersten Satzes einer oder mehrerer Ressourceneinheiten ist.

13. Verfahren nach Anspruch 11 oder 12,
wobei der erste Satz eines oder mehrerer Sendeparameter einen oder mehrere erste räumliche Ströme umfasst und der zweite Satz eines oder mehrerer Sendeparameter einen oder mehrere zweite räumliche Ströme umfasst und/oder
wobei der erste Satz eines oder mehrerer Sendeparameter ein erstes Modulations- und Codierungsschema umfasst und der zweite Satz ein zweites Modulations- und Codierungsschema umfasst und/oder
wobei der erste Satz eines oder mehrerer Sendeparameter eine erste Sendeleistung umfasst und der zweite Satz eines oder mehrerer Sendeparameter eine zweite Sendeleistung umfasst und/oder
wobei der zweite Satz eines oder mehrerer Sendeparameter eine maximale Dauer der zweiten Drahtlosübertragung umfasst.

14. Verfahren nach einem der Ansprüche 11 bis 13,
wobei die zweite Drahtlosübertragung nach der ersten Drahtlosübertragung beginnt und/oder
wobei die zweite Drahtlosübertragung vor der ersten Drahtlosübertragung endet und/oder
wobei OFDM-Signale der zweiten Drahtlosübertragung mit OFDM-Symbolen der ersten Drahtlosübertragung zeitlich abgeglichen sind und/oder
wobei die erste Drahtlosübertragung und die zweite Drahtlosübertragung jeweils einen Präambelteil und einen Datenteil umfassen, wobei der Präambelteil der ersten Drahtlosübertragung und der Präambelteil der zweiten Drahtlosübertragung sich zeitlich nicht überlappen.

15. Verfahren nach einem der Ansprüche 11 bis 14, umfassend, dass:
die drahtlose Station (11; 900; 1100) nach der ersten Drahtlosübertragung eine Bestätigung empfängt, die angibt, ob die zweite Drahtlosübertragung durch den Zugangspunkt (10; 700; 1000) korrekt empfangen wurde.

16. Verfahren nach einem der Ansprüche 11 bis 15, umfassend, dass:
die drahtlose Station (11; 900; 1100) eine Angabe einer Fähigkeit des Zugangspunkts (10; 700; 1000) zum Steuern der ersten Drahtlosübertragung und der zweiten Drahtlosübertragung empfängt und die zweite Drahtlosübertragung basierend auf der empfangenen Angabe der Fähigkeit sendet,
wobei die drahtlose Station (11; 900; 1100) die Angabe der Fähigkeit in einem Beacon-Rahmen, Assoziationsantwortrahmen, einem Reassoziationsantwortrahmen oder einem Sondenantwortrahmen empfängt; und/oder
die drahtlose Station (11; 900; 1100) eine Angabe einer Fähigkeit der drahtlosen Station (11; 900; 1100) zum Interpretieren des Empfangs der Nachricht (405; 506) und zum Handhaben der zweiten Drahtlosübertragung sendet,
wobei der Zugangspunkt (10; 700; 1000) die Angabe der Fähigkeit in einem Assoziationsantwortrahmen, einem Reassoziationsantwortrahmen oder einem Sondenantwortrahmen sendet.

17. Verfahren nach einem der Ansprüche 11 bis 16,
wobei das Drahtloskommunikationssystem auf einer Wireless Local Area Network-Technologie gemäß der IEEE 802.11-Standardfamilie basiert.

18. Zugangspunkt (10; 700; 1000) für ein Drahtloskommunikationssystem, wobei der Zugangspunkt (10; 700; 1000) konfiguriert ist zum:
Reservieren einer Übertragungsgelegenheit, TXOP, auf einem Drahtloskanal;
Bestimmen für eine drahtlose Station (11; 900; 1100), die mit dem Zugangspunkt (10; 700; 1000) assoziiert ist, eines ersten Satzes eines oder mehrerer Sendeparameter, der in einer disponierten ersten Drahtlosübertragung von der drahtlosen Station (11; 900; 1100) an den Zugangspunkt (10; 700; 1000) angewendet werden soll;
Senden einer Nachricht (403; 503) zum Auslösen der ersten Drahtlosübertragung durch die drahtlose Station (11; 900; 1100), wobei die Nachricht (403; 503) den ersten Satz eines oder mehrerer Sendeparameter angibt und ferner einen zweiten Satz eines oder mehrerer Sendeparameter angibt und, dass mindestens eine zusätzliche drahtlose Station (11; 900; 1100), die die Nachricht (403; 503) empfängt, eine zweite Drahtlosübertragung bei der TXOP für eine Dauer, die kürzer als die erste Drahtlosübertragung ist, und unter Verwendung des angegebenen zweiten Satzes eines oder mehrerer Sendeparameter und von Funkressourcen durchführen darf, die sich zumindest teilweise mit Funkressourcen überlappen, die der ersten Drahtlosübertragung zugewiesen sind, wobei die zweite Drahtlosübertragung kein Disponieren erfordert.

19. Zugangspunkt (10; 700; 1000) nach Anspruch 18,
wobei der Zugangspunkt (10; 700; 1000) zum Durchführen eines Verfahrens nach einem der Ansprüche 2 bis 10 konfiguriert ist.

20. Drahtlose Station (11; 900; 1100) für ein Drahtloskommunikationssystem, wobei die drahtlose Station (10; 11; 900; 1100) konfiguriert ist zum:
Empfangen von einem Zugangspunkt (10; 700; 1000) des Drahtloskommunikationssystems einer Nachricht (403; 503) zum Auslösen einer disponierten ersten Drahtlosübertragung durch eine andere drahtlose Station (11; 900; 1100) bei einer vom Zugangspunkt (10; 700; 1000) reservierten TXOP, wobei die Nachricht (403; 503) einen ersten Satz eines oder mehrerer Sendeparameter angibt, der von der anderen drahtlosen Station (11; 900; 1100) beim Durchführen der ersten Drahtlosübertragung verwendet werden soll, und ferner einen zweiten Satz eines oder mehrerer Sendeparameter angibt und, dass die drahtlose Station (11; 900; 1100) eine zweite Drahtlosübertragung bei der TXOP für eine Dauer, die kürzer als die erste Drahtlosübertragung ist, und unter Verwendung des angegebenen zweiten Satzes eines oder mehrerer Sendeparameter und von Funkressourcen durchführen darf, die sich zumindest teilweise mit Funkressourcen überlappen, die der ersten Drahtlosübertragung zugewiesen sind; und
Durchführen in Reaktion auf die Nachricht (403; 503) der zweiten Drahtlosübertragung bei der TXOP mit einer Dauer, die kürzer als die erste Drahtlosübertragung ist, und unter Verwendung des angegebenen zweiten Satzes eines oder mehrerer Sendeparameter auf Funkressourcen durchführt, die sich zumindest teilweise mit Funkressourcen überlappen, die der ersten Drahtlosübertragung zugewiesen sind, wobei die zweite Drahtlosübertragung kein Disponieren erfordert.

21. Drahtlose Station (11; 900; 1100) nach Anspruch 20,
wobei die drahtlose Station (11; 900; 1100) zum Durchführen eines Verfahrens nach einem der Ansprüche 12 bis 17 konfiguriert ist.

22. Computerprogramm oder Computerprogrammprodukt, umfassend:
Programmcode, der von mindestens einem Prozessor (1050) eines Zugangspunkts (10; 700; 1000) ausgeführt werden soll, wobei die Ausführung des Programmcodes den Zugangspunkt (10; 700; 1000) zum Durchführen eines Verfahrens nach einem der Ansprüche 1 bis 10 veranlasst, oder
Programmcode, der von mindestens einem Prozessor (1150) einer drahtlosen Station (11; 900; 1100) ausgeführt werden soll, wobei die Ausführung des Programmcodes die drahtlose Station (11; 900; 1100) zum Durchführen eines Verfahrens nach einem der Ansprüche 11 bis 17 veranlasst.

## Revendications

1. Procédé de commande de transmissions sans fil dans un système de communication sans fil, le procédé comprenant :
par un point d'accès (10 ; 700 ; 1000) du système de communication sans fil, la réservation d'une opportunité de transmission, TXOP, sur un canal sans fil ;
par le point d'accès (10 ; 700 ; 1000), la détermination, pour une station sans fil (11 ; 900 ; 1100) associée au point d'accès (10 ; 700 ; 1000), d'un premier ensemble d'un ou plusieurs paramètres de transmission à appliquer dans une première transmission sans fil programmée depuis la station sans fil (11 ; 900 ; 1100) au point d'accès (10 ; 700 ; 1000) ;
par le point d'accès (10 ; 700 ; 1000), l'envoi d'un message (405 ; 506) pour déclencher la première transmission sans fil par la station sans fil (11 ; 900 ; 1100), le message (405 ; 506) indiquant le premier ensemble d'un ou plusieurs paramètres de transmission, et indiquant en outre un deuxième ensemble d'un ou plusieurs paramètres de transmission et qu'au moins une station sans fil (11; 900 ; 1100) supplémentaire recevant le message (405 ; 506) est autorisée à réaliser une deuxième transmission sans fil dans la TXOP pendant une durée inférieure à celle de la première transmission sans fil et à l'aide du deuxième ensemble indiqué d'un ou plusieurs paramètres de transmission et de ressources radio qui chevauchent au moins en partie des ressources radio allouées à la première transmission sans fil, dans lequel la deuxième transmission sans fil ne nécessite pas de programmation.

2. Procédé selon la revendication 1, comprenant :
en réponse à la détection d'un besoin pour la première transmission sans fil, la détermination, par le point d'accès (10 ; 700 ; 1000), du premier ensemble d'un ou plusieurs paramètres de transmission et du deuxième ensemble d'un ou plusieurs paramètres de transmission en tenant compte d'une survenance possible de la deuxième transmission sans fil depuis l'au moins une station sans fil (11 ; 900 ; 1100) supplémentaire.

3. Procédé selon la revendication 1 ou 2,
dans lequel le premier ensemble d'un ou plusieurs paramètres de transmission comprend un premier ensemble d'une ou plusieurs unités de ressources définies par multiplexage par répartition de fréquence orthogonale, OFDM,
dans lequel le deuxième ensemble d'un ou plusieurs paramètres de transmission comprend un deuxième ensemble d'une ou plusieurs unités de ressources définies par OFDM, le deuxième ensemble d'une ou plusieurs unités de ressources chevauchant au moins en partie le premier ensemble d'une ou plusieurs unités de ressources, et
dans lequel le deuxième ensemble d'une ou plusieurs unités de ressources est un sous-ensemble du premier ensemble d'une ou plusieurs unités de ressources.

4. Procédé selon l'une quelconque des revendications précédentes,
dans lequel le premier ensemble d'un ou plusieurs paramètres de transmission comprend un ou plusieurs premiers flux spatiaux et le deuxième ensemble d'un ou plusieurs paramètres de transmission comprend un ou plusieurs deuxièmes flux spatiaux, et/ou
dans lequel le premier ensemble d'un ou plusieurs paramètres de transmission comprend un premier schéma de modulation et de codage et le deuxième ensemble d'un ou plusieurs paramètres de transmission comprend un deuxième schéma de modulation et de codage, et/ou
dans lequel le premier ensemble d'un ou plusieurs paramètres de transmission comprend une première puissance de transmission et le deuxième ensemble d'un ou plusieurs paramètres de transmission comprend une deuxième puissance de transmission, et/ou
dans lequel le deuxième ensemble d'un ou plusieurs paramètres de transmission comprend une durée maximale de la deuxième transmission sans fil.

5. Procédé selon l'une quelconque des revendications précédentes,
dans lequel la deuxième transmission sans fil commence après la première transmission sans fil, et/ou
dans lequel la deuxième transmission sans fil se termine avant la première transmission sans fil, et/ou
dans lequel des symboles OFDM de la deuxième transmission sans fil sont alignés dans le temps sur des symboles OFDM de la première transmission sans fil, et/ou
dans lequel la première transmission sans fil et la deuxième transmission sans fil comprennent chacune une partie de préambule et une partie de données, dans lequel la partie de préambule de la première transmission sans fil et la partie de préambule de la deuxième transmission sans fil ne se chevauchent pas dans le temps.

6. Procédé selon l'une quelconque des revendications précédentes, comprenant :
après la première transmission sans fil, l'envoi, par le point d'accès (10 ; 700 ; 1000), d'un accusé de réception indiquant si la deuxième transmission sans fil a été correctement reçue ou non par le point d'accès (10 ; 700 ; 1000).

7. Procédé selon l'une quelconque des revendications précédentes, comprenant :
par le point d'accès (10 ; 700 ; 1000), la réception de la première transmission sans fil par une première chaîne de traitement de réception du point d'accès (10 ; 700 ; 1000) ; et
par le point d'accès (10 ; 700 ; 1000), la réception de la deuxième transmission sans fil par une deuxième chaîne de traitement de réception du point d'accès (10 ; 700 ; 1000).

8. Procédé selon l'une quelconque des revendications précédentes,
dans lequel la deuxième transmission sans fil correspond à un trafic de faible latence, et/ou
dans lequel la première transmission sans fil correspond à un trafic au mieux.

9. Procédé selon l'une quelconque des revendications précédentes, comprenant :
par le point d'accès (10 ; 700 ; 1000), l'envoi d'une indication d'une capacité du point d'accès (10 ; 700 ; 1000) à commander la première transmission sans fil et la deuxième transmission sans fil,
dans lequel le point d'accès (10 ; 700 ; 1000) envoie l'indication de la capacité dans une trame de balise, une trame de réponse d'association, une trame de réponse de réassociation, ou une trame de réponse de sonde ; et/ou
par le point d'accès (10 ; 700 ; 1000), la réception d'une indication d'une capacité de l'au moins une station sans fil (11 ; 900 ; 1100) supplémentaire à interpréter la réception du message (405 ; 506) et à gérer la deuxième transmission sans fil,
dans lequel le point d'accès (10 ; 700 ; 1000) reçoit l'indication de la capacité dans une trame de demande d'association, une trame de demande de réassociation ou une trame de demande de sonde.

10. Procédé selon l'une quelconque des revendications précédentes,
dans lequel le système de communication sans fil est basé sur une technologie de réseau local sans fil conforme à la famille de normes IEEE 802.11.

11. Procédé de commande de transmissions sans fil dans un système de communication sans fil, le procédé comprenant :
par une station sans fil (11; 900 ; 1100), la réception, depuis un point d'accès (10 ; 700 ; 1000) du système de communication sans fil, d'un message (403 ; 503) pour déclencher une première transmission sans fil programmée par une autre station sans fil (11 ; 900 ; 1100) dans une TXOP réservée par le point d'accès (10 ; 700 ; 1100), le message (403 ; 503) indiquant un premier ensemble d'un ou plusieurs paramètres de transmission à utiliser par l'autre station sans fil (11 ; 900 ; 1100) lors de la réalisation de la première transmission sans fil et indiquant en outre un deuxième ensemble d'un ou plusieurs paramètres de transmission et que la station sans fil (11 ; 900 ; 1100) est autorisée à réaliser une deuxième transmission sans fil dans la TXOP pendant une durée inférieure à celle de la première transmission sans fil et à l'aide du deuxième ensemble indiqué d'un ou plusieurs paramètres de transmission et de ressources radio qui chevauchent au moins en partie des ressources radio allouées à la première transmission sans fil ; et, en réponse au message (403 ; 503), la réalisation, par la station sans fil (11 ; 900 ; 1100), de la deuxième transmission sans fil dans la TXOP avec une durée inférieure à celle de la première transmission sans fil et à l'aide du deuxième ensemble indiqué d'un ou plusieurs paramètres de transmission sur des ressources radio qui chevauchent au moins en partie des ressources radio allouées à la première transmission sans fil, dans lequel la deuxième transmission sans fil ne nécessite pas de programmation.

12. Procédé selon la revendication 11,
dans lequel le premier ensemble d'un ou plusieurs paramètres de transmission comprend une ou plusieurs unités de ressources définies par multiplexage par répartition de fréquence orthogonale, OFDM, sur le canal sans fil,
dans lequel le deuxième ensemble d'un ou plusieurs paramètres de transmission comprend un deuxième ensemble d'une ou plusieurs unités de ressources définies par OFDM, le deuxième ensemble d'une ou plusieurs unités de ressources chevauchant au moins en partie le premier ensemble d'une ou plusieurs unités de ressources, et
dans lequel le deuxième ensemble d'une ou plusieurs unités de ressources est un sous-ensemble du premier ensemble d'une ou plusieurs unités de ressources.

13. Procédé selon la revendication 11 ou 12,
dans lequel le premier ensemble d'un ou plusieurs paramètres de transmission comprend un ou plusieurs premiers flux spatiaux et le deuxième ensemble d'un ou plusieurs paramètres de transmission comprend un ou plusieurs deuxièmes flux spatiaux, et/ou
dans lequel le premier ensemble d'un ou plusieurs paramètres de transmission comprend un premier schéma de modulation et de codage et le deuxième ensemble d'un ou plusieurs paramètres de transmission comprend un deuxième schéma de modulation et de codage, et/ou
dans lequel le premier ensemble d'un ou plusieurs paramètres de transmission comprend une première puissance de transmission et le deuxième ensemble d'un ou plusieurs paramètres de transmission comprend une deuxième puissance de transmission, et/ou
dans lequel le deuxième ensemble d'un ou plusieurs paramètres de transmission comprend une durée maximale de la deuxième transmission sans fil.

14. Procédé selon l'une quelconque des revendications 11 à 13,
dans lequel la deuxième transmission sans fil commence après la première transmission sans fil, et/ou
dans lequel la deuxième transmission sans fil se termine avant la première transmission sans fil, et/ou
dans lequel des symboles OFDM de la deuxième transmission sans fil sont alignés dans le temps sur des symboles OFDM de la première transmission sans fil, et/ou
dans lequel la première transmission sans fil et la deuxième transmission sans fil comprennent chacune une partie de préambule et une partie de données, dans lequel la partie de préambule de la première transmission sans fil et la partie de préambule de la deuxième transmission sans fil ne se chevauchent pas dans le temps.

15. Procédé selon l'une quelconque des revendications 11 à 14, comprenant :
après la première transmission sans fil, la réception, par la station sans fil (11 ; 900 ; 1100), d'un accusé de réception indiquant si la deuxième transmission sans fil a été correctement reçue ou non par le point d'accès (10 ; 700 ; 1000).

16. Procédé selon l'une quelconque des revendications 11 à 15, comprenant :
par la station sans fil (11 ; 900 ; 1100), la réception d'une indication d'une capacité du point d'accès (10 ; 700 ; 1000) à commander la première transmission sans fil et la deuxième transmission sans fil, et l'envoi de la deuxième transmission sans fil sur la base de l'indication reçue de la capacité,
dans lequel la station sans fil (11 ; 900 ; 1100) reçoit l'indication de la capacité dans une trame de balise, une trame d'association, une trame de réassociation, ou une trame de réponse de sonde ; et/ou
par la station sans fil (11 ; 900 ; 1100), l'envoi d'une indication d'une capacité de la station sans fil (11 ; 900 ; 1100) à interpréter la réception du message (405 ; 506) et à gérer la deuxième transmission sans fil,
dans lequel le point d'accès (10 ; 700 ; 1000) envoie l'indication de la capacité dans une trame de demande d'association, une trame de demande de réassociation ou une trame de demande de sonde.

17. Procédé selon l'une quelconque des revendications 11 à 16,
dans lequel le système de communication sans fil est basé sur une technologie de réseau local sans fil conforme à la famille de normes IEEE 802.11.

18. Point d'accès (10 ; 700 ; 1000) pour un système de communication sans fil, le point d'accès (10 ; 700 ; 1000) étant configuré pour :
réserver une opportunité de transmission, TXOP, sur un canal sans fil ;
déterminer, pour une station sans fil (11 ; 900 ; 1100) associée au point d'accès (10 ; 700 ; 1000), un premier ensemble d'un ou plusieurs paramètres de transmission à appliquer dans une première transmission sans fil programmée depuis la station sans fil (11 ; 900 ; 1100) au point d'accès (10 ; 700 ; 1000) ;
envoyer un message (403 ; 503) pour déclencher la première transmission sans fil par la station sans fil (11 ; 900 ; 1100), le message (403 ; 503) indiquant le premier ensemble d'un ou plusieurs paramètres de transmission, et indiquant en outre un deuxième ensemble d'un ou plusieurs paramètres de transmission et qu'au moins une station sans fil (11 ; 900 ; 1100) supplémentaire recevant le message (405 ; 506) est autorisée à réaliser une deuxième transmission sans fil dans la TXOP pendant une durée inférieure à celle de la première transmission sans fil et à l'aide du deuxième ensemble indiqué d'un ou plusieurs paramètres de transmission et de ressources radio qui chevauchent au moins en partie des ressources radio allouées à la première transmission sans fil, dans lequel la deuxième transmission sans fil ne nécessite pas de programmation.

19. Point d'accès (10 ; 700 ; 1000) selon la revendication 18,
dans lequel le point d'accès (10 ; 700 ; 1000) est configuré pour réaliser un procédé selon l'une quelconque des revendications 2 à 10.

20. Station sans fil (11 ; 900 ; 1100) pour un système de communication sans fil, la station sans fil (11 ; 900 ; 1100) étant configurée pour :
recevoir, depuis un point d'accès (10 ; 700 ; 1000) du système de communication sans fil, un message (403 ; 503) pour déclencher une première transmission sans fil programmée par une autre station sans fil (11 ; 900 ; 1100), dans une TXOP réservée par le point d'accès (10 ; 700 ; 1100), le message (403 ; 503) indiquant un premier ensemble d'un ou plusieurs paramètres de transmission à utiliser par l'autre station sans fil (11 ; 900 ; 1100) lors de la réalisation de la première transmission sans fil et indiquant en outre un deuxième ensemble d'un ou plusieurs paramètres de transmission et que la station sans fil (11 ; 900 ; 1100) est autorisée à réaliser une deuxième transmission sans fil dans la TXOP pendant une durée inférieure à celle de la première transmission sans fil et à l'aide du deuxième ensemble indiqué d'un ou plusieurs paramètres de transmission et de ressources radio qui chevauchent au moins en partie des ressources radio allouées à la première transmission sans fil ; et
en réponse au message (403 ; 503), réaliser la deuxième transmission sans fil dans la TXOP avec une durée inférieure à celle de la première transmission sans fil et à l'aide du deuxième ensemble indiqué d'un ou plusieurs paramètres de transmission sur des ressources radio qui chevauchent au moins en partie des ressources radio allouées à la première transmission sans fil, dans laquelle la deuxième transmission sans fil ne nécessite pas de programmation.

21. Station sans fil (11; 900 ; 1100) selon la revendication 20,
dans laquelle la station sans fil (11 ; 900 ; 1100) est configurée pour réaliser un procédé selon l'une quelconque des revendications 12 à 17.

22. Programme informatique ou produit programme informatique comprenant :
un code de programme à exécuter par au moins un processeur (1050) d'un point d'accès (10 ; 700 ; 1000), selon lequel une exécution du code de programme amène le point d'accès (10 ; 700 ; 1000) à réaliser un procédé selon l'une quelconque des revendications 1 à 10, ou
un code de programme à exécuter par au moins un processeur (1150) d'une station sans fil (11 ; 900 ; 1100), selon lequel une exécution du code de programme amène la station sans fil (11 ; 900 ; 1100) à réaliser un procédé selon l'une quelconque des revendications 11 à 17.
